# EUROPEAN PATENT SPECIFICATION

(11) **EP 2 162 575 B1**
(45) Date of publication and mention of the grant of the patent: **13.03.2013**
(21) Application number: 08849760.7
(22) Date of filing: 03.07.2008
(51) Int. Cl.: D01F 1/10, D01F 2/24, C08K 5/00, D01F 2/02, C08L 1/00

(54) **A LYOCELL FIBER WITH MODIFIED PROPERTY AND A PROCESS FOR MAKING THEREFOR**
LYOCELL-FASER MIT VERÄNDERTEN EIGENSCHAFTEN UND VERFAHREN ZU IHRER HERSTELLUNG
FIBRE LYOCELL AVEC UNE CARACTÉRISTIQUE MODIFIÉE ET UN PROCESSUS DE PRODUCTION ASSOCIÉ

(30) Priority: 03.07.2007 IN MU12592007
(43) Date of publication of application: 17.03.2010
(73) Proprietor: Aditya Birla Science & Technology CO. LTD., Mumbai 400 025, Maharashtra (IN)
(72) Inventor: LODHA, Preeti, Mumbai 400 025 Maharashtra (IN); KAPOOR, Bir, Mumbai 400 025 Maharashtra (IN); MAHAJAN, Tushar, Mumbai 400 025 Maharashtra (IN)
(74) Representative: Isarpatent
(86) International application number: PCT/IN2008/000424
(87) International publication number: WO 2009/063479

(56) References cited:
- WO-A1-00/26447
- WO-A1-03/027365
- WO-A1-2004/081267
- WO-A2-2005/017247
- US-A- 4 756 958

## Description

### Field of the Invention

The present invention relates to textile fibers.

### Background of the Invention

The term "fiber" or "textile fiber" means a substance which is capable of being spun into a yarn or made into a fabric by bonding or by interlacing in a variety of methods including weaving, knitting, braiding, felting, twisting, or webbing, and which is the basic structural element of textile products.

Fibers are classified on the basis of their length such as short fibers or staple fiber and long fibers or filament fiber. The fibers can also be classified on the basis of their origin such as natural fibers and man-made fibers. The term natural fibers means any fiber that exists as such in the natural state e.g. vegetable fibers or wood fibers. The other type of fibers is obtained from chemical substances. These are called man made fibers. They are polyester, nylon, acrylic (cashmilon) and the like.

For centuries, mankind has relied upon various plants and animals to provide raw materials for fabrics and clothing. In recent times, the industrialization and scientific advancement has provided several improved materials having far superior properties, particularly suitable for clothing.

Lyocell is a manmade fiber derived from cellulose. Though it is related to , lyocell is obtained by a solvent spinning technique. The solvent spinning technique, which is simpler and more environmentally sound, since it uses a non-toxic solvent chemical that can be recycled in the manufacturing process.

It is an extremely strong fabric with industrial uses such as in automotive filters, ropes, abrasive materials, bandages and protective suiting material. It is primarily found in the garment industry, particularly in women's clothing.

Lyocell fibers are prepared by following process steps:
The raw cellulose is dissolved into heated, pressurized vessel filled with an amine oxide solvent.

After soaking for a short time in the solvent at high temperature under vacuum to remove excess water, the cellulose forms a clear solution and then it is filtered. The solution is then pumped through spinneret which is pierced with small holes to obtain long strands of fibers. The fibers are then immersed in another dilute solution of amine oxide. This helps to set the fiber strands. Then, they are washed with de-mineralized water.

The lyocell fibers are then led to a drying area, where the water is evaporated from it. The strands are led to a finishing area, where the lubricant is applied.

The dried, finished fibers are at this stage are called as a tow, which is a large untwisted bundle of continuous length filaments. The bundles of tow are taken to a crimper, a machine which compresses the fiber, giving it texture and bulk. The crimped fiber is then carded by mechanical carders, which perform an action like combing, to separate and order the strands.The carded strands are cut and baled for shipment to a fabric mill.

The amine oxide used to dissolve the cellulose and set the fiber after spinning is recovered and re-used in the manufacturing process.

From the spun or filament yarn, fabric is formed by knitting or weaving operations. Knitted fabrics can be made by using hooked needles to interlock one or more sets of yarns through a set of loops. The loops may be either loosely or closely constructed, depending on the purpose of the fabric. Knitted fabrics can be used for hosiery, underwear, sweaters, slacks, suits, coats, rugs and other home furnishings. Knitting is performed using either weft or warp processes.

Some typical preparations that are involved in the weaving operations are warping, slashing or sizing. Sizing agents are added to the yarn by solution or pad/dry techniques. Differences in raw materials, processing chemicals, fiber diameter, post treatments and blend ratios can be manipulated to produce a fiber having customized properties suitable for desired application. It is often desired that the lyocell fabrics possess typical properties such as thermal stability, ability to retain perfumes, antibacterial properties and the like. These properties are essential in several industrial as well as household applications. There has been a considerable interest in developing such materials. In order to impart various desirable properties to the fabric as mentioned above to the fabric, several additives are added. Such additives include antimicrobial agents, deodorizing agents, antistatic agents, perfumes. Besides such specific additives, generic additives for improving overall quality of the fabric, such as sizing agents, additives for increasing yarn softness and pliability are also added.

### Prior Art:

WO2008030648 discloses a temperature regulating, polymer containing fabric and a suspension formulation used in preparation of such fibers. The suspension comprises a solvent and plurality of microcapsules containing phase-change material. The suspension is used for incorporating the microcapsules in the fabric. The microcapsules comprise a shell composed of acrylic acid and their derivatives and a core which is composed of a phase change material having a latent heat in a range between 80 J/g and 400 J/gm and a transition temperature in the range of 20°C-50°C.

An encapsulated phase change material comprising: a hollow shell defining an internal cavity; and a phase change composition positioned in the internal cavity is described and claimed in United States Patent No. 6,689,466. The phase change composition comprises a phase change material and a thermal stabilizer. Said composition is used or incorporated in a variety of processes e.g., melt spinning processes, extrusion processes, injection molding processes to form articles having enhanced reversible thermal properties.

United States Patent Application no. 20070026228 discloses cellulosic fibers having enhanced reversible thermal properties and applications of such cellulosic fibers. The cellulosic fibers include a fiber body including a cellulosic material and a set of microcapsules dispersed in the cellulosic material. The set of microcapsules contain a phase change material having a latent heat of at least 40 J/g and a transition temperature in the range of 0°C-IOO°C. The phase change material provides thermal regulation based on absorption and release of the latent heat at the transition temperature.

US 5985301 discloses a process of producing an antibacterial fiber product which involves the method step of solvent spinning for incorporating an inorganic antibacterial silver in the cellulose fiber during its preparation.

Another US patent 5405644 discloses a similar process employing inorganic antimicrobial agents which additionally involves the use of discoloring inhibitive agent for preventing possible discoloration of the fabric.

Another method of imparting multiple properties such as oil-repellency, soil-releasing properties and anti-bacterial property to the fabric is disclosed in US 5968599 which involves dipping the mixed or blended fabric in treating solution comprising the antimicrobial constituent like 1 to 10% weight of phenolic antibacterial agent.

The process as disclosed in US 6368361 involves contacting and immersing the fiber in an aqueous phase containing a cationic surfactant with a quaternary ammonium salt group, a water-soluble protein, and an alkaline compound are dissolved. The fiber is then separated from the aqueous phase and immersed in another aqueous phase containing tea polyphenol which is an antimicrobial agent.

A two-stage process comprising a first stage treatment with a water soluble salt of a transition metal and an alkali and a second stage treatment with a solution of a bisbiguanide compound, thereby forming a bond between the cellulose fibers, the transition metal and the bisbiguanide compound is described in US patent 5856248 for improving the properties of the cellulosic fiber.

US 4,784,909 discloses an anti-fungus, deodorant fiber material obtained by blending two types of fibers containing different antimicrobial constituents.

US Patent 5652049 discloses a composite non-woven fabric comprising: a first non-woven web layer comprising antibacterial fibers and a second non-woven web layer disposed superposedly adjacent the first web layer.

A composite textile fabric involving a blend of two fabric layers wherein one of the fabric layers exhibits antimicrobial properties is disclosed in US Patent 6194332. Similarly a yarn comprising plurality of fibers with different properties is disclosed in US patent Application 20070148449.

US Patent 5707736 discloses material like fabric, yarn which contains releasable antimicrobial agent which is released when the material is brought in contact with moist surface. The process involves the use of a water soluble amine salt anti-microbial agent.

US patent 6436419 discloses a process that involves dyeing a polymer with an acid dye to form a dye coated polymer, and attaching an antimicrobial agent like quaternary ammonium salt, thereby making said polymer antimicrobial.

U.S. patent application 20040247653 discloses a process of preparing an antimicrobial and antiviral polymeric material which involves embedding microscopic water insoluble powder particles of ionic copper oxide.

US patent 6712121 discloses a method for forming an antimicrobially-treated fabric, which involves preparation of antimicrobially-treated cellulosic fibrous material and hydraulically entangling such material with a non-woven substrate followed by drying.

The process as described in US Patent Application 20070006391 involves the use of metal (copper, silver, gold, tin, zinc) complexed with a complexing polymer, as an antimicrobial agent. The antimicrobial composition that is used as an antimicrobial constituent does not contain surfactants.

Cellulose fibers and products made there from specifically treated to absorb body secretions are disclosed in US Patent 5856248. The two stage process as described in said US patent involves chemical treatment of the cellulose fibers with a water soluble salt of transition metal alkali and chlorhexidine.

A yarn comprising plurality of metal coated fibers with different properties such as anti-static, anti-odor, and anti-microbial properties is disclosed in US patent Application 20070148449.

US 7012053 discloses a process for producing treated fabric which involves application of composition, comprising fabric care additive, perfume, color restoring agent and antimicrobial agent by means of spraying, soaking or dipping.

Another US 6670317 discloses process of applying fabric care composition which involves contacting fibers with composition comprising lipophilic fluid and perfume.

US 5656333 discloses a method of producing an absorbent nonwoven article which comprises coating of fibers with binder containing colorants, softeners, fragrances, fillers and bactericidal agents.

US 6080208 discloses a method for increasing the sun protection factor of the textile material by treating fiber material with the disclosed compound in specific concentration with the addition of other additives such as fluorescent whitening agent , perfume, colouring dye, opacifier, bactericide, fabric care ingredient, anti-gelling agent and corrosion inhibitor.

A process for producing deodorizing fibers comprising contacting fiber with a colloidal solution of copper hydroxide and/or zinc hydroxide is disclosed in US 5049159.

US 6335075 discloses a multilayer carpet having a deodorizing function. Deodorant is applied by spraying or foaming on one of the layers while it is kneaded on the other layers.

Another method of imparting multiple properties to the fabric is disclosed in US 6806213 which involves incorporation of aqueous solution comprising fragrance material, moisturizing agent and surfactant into the fiber.

Earlier known compositions used in preparation of property-modified fabrics such as with thermoregulatory properties, antimicrobial properties, and perfumed properties mainly involved conventional methods like spraying, solvent spinning the antimicrobial constituents on the fabric or comprise making discrete microcapsules with shells which in turn contain the phase agents with or without the stabilizers. However, such compositions and methods employing them suffer from several disadvantages which include adverse effects on the tensile strength of the fiber, change in visual appearance of the fabric, increased time lag for adapting with the changing temperature, decreased sensitivity of the phase changing agent on account of encapsulation. There is thus felt a need for a process of incorporating additives to fabric which overcomes these shortcomings.

### Objects of the Invention:

It is an object of this invention to provide property-modified lyocell products, wherein at least one property modifying constituent is incorporated into the body of the fiber.

Another object of this invention is to provide a process of incorporating thermoregulatory constituents into lyocell fibers which ensures uniform distribution of the thermoregulatory constituent throughout the fiber length.

Yet another object of this invention is to provide thermoregulatory lyocell fibers wherein the thermoregulatory constituents are retained in the lyocell product over a prolonged period of time.

Yet another object of this invention is to provide a process of incorporating thermoregulatory constituents to lyocell fibers which does not affect the feel and texture of the fabric.

Still another object of this invention is to provide a process of incorporating thermoregulatory constituents to lyocell fibers such that inherent properties of the lyocell fibers such as fiber strength, linear density, tenacity, heat resistance, dyeability and drying properties are not altered.

It is another object of this invention to provide antimicrobial lyocell fibers, wherein at least one antimicrobial constituent is incorporated in the body of the fiber.

Another object of this invention is to provide a process of incorporating antimicrobial constituents into lyocell fibers which ensures uniform distribution of the antimicrobial constituent throughout the fiber length.

Yet another object of this invention is to provide antimicrobial lyocell fibers wherein the antimicrobial constituents are retained in the lyocell product over a prolonged period of time.

Yet another object of this invention is to provide a process of incorporating antimicrobial constituents to lyocell fibers which does not alter the feel and texture of the fabric.

Still another object of this invention is to provide a process of incorporating antimicrobial constituents to lyocell fibers such that inherent properties of the lyocell fibers such as fiber strength, linear density, tenacity, heat resistance, dyeability and drying properties are not altered.

It is yet another object of this invention to provide perfumed lyocell fibers, wherein at least one perfume constituent is incorporated in the body of the fiber.

Another object of this invention is to provide a process of incorporating perfume constituents into lyocell fibers which ensures uniform distribution of the perfume constituent throughout the fiber length.

Yet another object of this invention is to provide perfumed lyocell fibers wherein the perfume constituents are retained in the lyocell product over a prolonged period of time.

Yet another object of this invention is to provide a process of incorporating perfume constituents to lyocell fibers which does not alter the feel and texture of the fabric.

Still another object of this invention is to provide a process of incorporating perfume constituents to lyocell fibers such that inherent properties of the lyocell fibers such as fiber strength, linear density, tenacity, heat resistance, dyeability and drying properties are not altered.

### Definitions:

As used in the present specification, the following words and phrases are generally intended to have the meanings as set forth below, except to the extent that the context in which they are used indicates otherwise. "Phase-change agent" means a substance having the ability to releases or absorbs heat whenever it undergoes change in its physical state. Enthalpy means heat content or total heat, including both sensible and latent heat. "Latent heat" means the heat energy needed to change the state of a substance (ie: from a solid to a liquid) but not it's temperature. "Flash point" means the temperature at which a substance gives off a sufficient amount of vapors to form an ignitable mixture with air. "Non-aqueous phase" means a melted mixture in liquid state which is water insoluble.

"Aqueous phase" means substance dissolved in water.

"Lyocell Polymer dope" means an intermediate material in the manufacture of lyocell products that is used for preparation of fibers.

"Preform mass" means an intermediate material suitable for making fibers.

"Perfume constituent for example citrus musk" means a group of compounds which when mixed together provides the scent referred to commercially as citrus musk.

### Summary of the Invention:

In accordance with the present invention there is provided a formulation meant for manufacture of lyocell products obtainable by a process comprising the following steps:
- selecting a non-water-soluble constituent from the group consisting of thermoregulatory constituents in an amount of 0.01 to 20%, antimicrobial constituents in an amount of 0.001 to 10% and perfume constituents in an amount of 0.001 to 10%, said amount being expressed with respect to the total mass of the formulation, mixing with at least one non-aqueous solvent in the case of antimicrobial constituents and perfume constituents and heating said constituent to form a liquid non-aqueous phase;
- dissolving and stirring at least one water soluble non-cationic surfactant having HLB value in the range of 9 to 40, said surfactant being in the range of 0.001 to 10% of the mass of the formulation, in water to obtain an aqueous phase;
- admixing and homogenizing the non-aqueous phase with the aqueous phase to obtain a micro-emulsion;
- mixing together cellulosic pulp in the range of 3 to 35% of the mass of the formulation and N-METHYL-MORPHOLINE-N-OXIDE (NNMO) solution, where NNMO is in the range of about 60 to 80% of the mass of the formulation, to form a slurry;
- dispersing the micro-emulsion in the slurry to obtain a preform mass wherein the non-water-soluble constituent is in the form of evenly dispersed micro-reservoirs having an average mean size in the range of 5 - 2,000 nm; and
- vaccumising the preform mass to remove water under 7 to 10 mm of Hg and a temperature over 90°C to obtain the formulation.

Typically, the non-water-soluble constituent is a thermoregulatory constituent having a melting point in the range where the thermoregulatory effect is desired, in the range of about 0.01 to 20% of the mass of the formulation.

Typically, the thermoregulatory constituent is at least one selected from a group consisting of nonadecane, eicosane, heptadecane, octadecane, pentadecane, hexadecane, decyl alcohol, lauryl alcohol and myristyl alcohol.

Typically, the surfactant is at least one non-ionic surfactant selected from the group of alkyl phenoxy ethoxylated non-ionic surfactants which include Polyoxyethylene(8) isooctylphenyl ether, Nonylphenol polyethylene glycol ether, Polyoxyethylene(9) nonylphenyl ether, Polyoxyethylene(10) isooctylphenyl ether, Polyoxyethylene(12) nonylphenyl ether, Polyoxyethylene(12) isooctylphenyl ether, Polyoxyethylene(40) nonylphenyl ether, Polyoxyethylene(40) isooctylphenyl ether, Polyoxyethylene(100) nonylphenyl ether, Polyoxyethylene(150) dinonylphenyl ether, Surfonic N-95(Poly (oxy-1, 2-ethanediyl), alpha- (nonyl phenyl)-omega-hydroxyl-glycol ether) (nonylphenol 9.5-mole ethoxylate) , Surfonic N-95(Poly (oxy-1, 2-ethanediyl), alpha- (nonyl phenyl)-omega-hydroxyl-glycol ether) (nonylphenol 9.5-mole ethoxylate) , Surfonic N-120(nonylphenol 12-mole ethoxylate), Surfonic N-150 (nonylphenol 15-mole ethoxylate), Surfonic N-200 (nonylphenol 20-mole ethoxylate) , Surfonic N-300( nonylphenol 30-mole ethoxylate) , Surfonic N-400 nonylphenol 40-mole ethoxylate, Surfonic LF-7 (Alkyl polyoxyalkylene ether) , Surfonic LF-17 (ethoxylated and propoxylated linear primary 12-14 carbon number alcohol), Igepal CO-630 (nonylphenoxy poly(ethyleneoxy)ethanol, branched), Surfonic DNP-40 (dinonylphenol ethoxylate glycol ether); ethoxylated alkyl alcohol surfactants, Polyethylene-block-Poly propylene glycol-block-polyethylene glycol and Ethylenediamine tetrakis(propylene oxide-block-ethylene oxide) tetrol.

Typically, the preferred HLB value of the surfactant is between 16 and 40.

In accordance with the present invention there is provided a thermoregulatory lyocell product being at least one product selected from the group consisting of fiber, yarn and fabric manufactured from the formulation provided by the present invention.

Typically, the formulation is an antimicrobial lyocell formulation comprising:
- at least one non-aqueous solvent in the range of about 0.01 to 20% of the mass of the formulation,
- at least one water insoluble antimicrobial constituent soluble in said solvent, said constituent being in the range of about 0.001 to 10% of the mass of the formulation,
- at least one water soluble surfactant having HLB value in the range of 9 to 40, said surfactant being in the range of 0.001 to 10% of the mass of the formulation,
- cellulosic pulp in the range of about 3% to 35% of the mass of the formulation,
- N-METHYL-MORPHOLINE-N-OXIDE (NNMO) in the range of about 60 to 80% of the mass of the formulation; and
- water in the range of about 0% to 20 % with respect to the mass of the formulation.

Typically, the antimicrobial constituent is at least one selected from a group consisting of 2-Methyl-4-isothiazolin-3-one, Phenoxyethanol, Benzoic acid 4-Hydroxy-methyl ester, Hydroxy-benzoic acid propyl ester, o- (2-naphthyl) methyl (3-methylphenyl) thiocarbamate, 5-chloro-2-(2,4-dichlorophenoxy)phenol, 4,5-dichloro-n-octyl-4-isothiazoline-3-one[DCOIT], 2-n-octyl-4-isothiazolin-3-one, 1-phenoxy propan-2-ol, pentachlorophenol, 5-chloro-2-dichlorophenoxy phenol, clotrimazole, p-chloro-m-xylenol and chloroquinaldol.

Typically, the solvent is at least one solvent selected from a group of solvents consisting of C₁₀-C₄₄ alkanes (paraffinic hydrocarbons), polyethylene, polypropylene, polypropylene glycol, polytetramethylene glycol, polypropylene malonate, polyneopentyl glycol sebacate, polypentane glutarate, polyvinyl myristate, polyvinyl stearate, polyvinyl laurate, polyhexadecyl methacrylate, polyoctadecyl methacrylate, polyethylene oxides, polyethylene glycols, Arachidyl alcohol, behenyl alcohol, Selachyl alcohol, chimimyl alcohol, polyesters, di-iso decyl phthalate, benzyl alcohol, C4 -C30 aliphatic alcohols, C4 -C30 saturated hydrocarbons, C₄ -C₃₀ monounsaturated hydrocarbons, natural oils and mineral oil paraffins.

In accordance with the present invention there is provided an antimicrobial lyocell product selected from the group consisting of fiber, yarn and fabric manufactured from the formulation of the present invention.

Typically, the formulation is a perfumed lyocell formulation comprising:
- at least one non-aqueous solvent in the range of about 0.01 to 20% of the mass of the formulation;
- at least one water insoluble perfume constituent soluble said solvent, in the range of about 0.001 to 10% of the mass of the formulation;
- at least one water soluble non-cationic surfactant having HLB value in the range of 9 to 40, in the range of range of 0.001 to 10% of the mass of the formulation,
- cellulosic pulp in the range of about 3% to 35% of the mass of the formulation;
- NNMO in the range of about 60 to 80% of the mass of the formulation; and
- water in the range of about 0% to 20 % with respect to the mass of the formulation.

Typically, the perfume constituent is at least one selected from a group consisting of citrus musk, floral woody, citrus musk woody, fresh bouquet, musk, floral musk, lavender oil, jasmine oil, rose oil, cedarwood oil, sandalwood oil, orange oil and lemon oil.

Typically, the solvent is at least one solvent selected from a group of solvents consisting of C₁₀-C₄₄ alkanes (paraffinic hydrocarbons), polyethylene, polypropylene, polypropylene glycol, polytetramethylene glycol, polypropylene malonate, polyneopentyl glycol sebacate, polypentane glutarate, polyvinyl myristate, polyvinyl stearate, polyvinyl laurate, polyhexadecyl methacrylate, polyoctadecyl methacrylate, polyethylene oxides, polyethylene glycols, Arachidyl alcohol, behenyl alcohol, Selachyl alcohol, chimimyl alcohol, polyesters, di-iso decyl phthalate, benzyl alcohol, C4 -C30 aliphatic alcohols ,C4 -C30 saturated hydrocarbons, C₄ -C₃₀ monounsaturated hydrocarbons, natural oils and mineral oil paraffins.

In accordance with the present invention there is provided a perfumed lyocell product selected from the group consisting of fiber, yarn and fabric manufactured from the formulation of the present invention.

In accordance with the present invention there is also provided a process of preparation of a formulation meant for manufacture of lyocell products of the present invention comprising the following steps:
- selecting a non-water-soluble constituent from the group consisting of thermoregulatory constituents, antimicrobial constituents and perfume constituents, mixing with at least one non-aqueous solvent in the case of antimicrobial constituents and perfume constituents and heating said constituent to form a liquid non-aqueous phase;
- dissolving and stirring at least one water soluble nonionic surfactant having HLB value in the range of 9 to 40, optionally with a co-surfactant, in water to obtain an aqueous phase;
- admixing and homogenizing the non-aqueous phase with the aqueous phase to obtain a micro-emulsion;
- mixing together cellulosic pulp and NNMO solution to form a slurry;
- dispersing the micro-emulsion in the slurry to obtain a preform mass wherein the non-water-soluble constituent is in the form of evenly dispersed micro-reservoirs; and
- vaccumising the preform mass to remove water under 7 to 10 mm of Hg and a temperature over 90°C to obtain the formulation.

### Brief Description of the accompanying Drawings:

The invention will be described in detail with reference to the accompanying drawings.

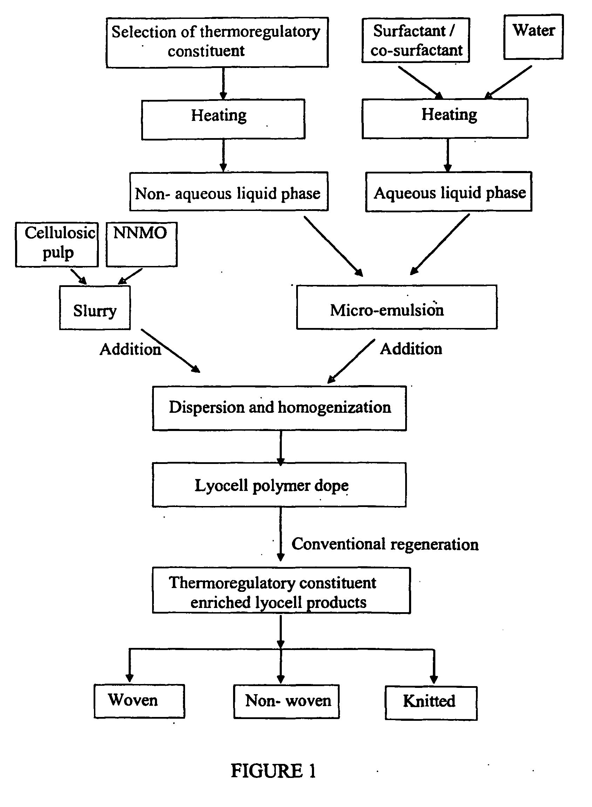

In the accompanying drawing, Figure 1 illustrates the block diagram showing the method steps involved in the process of making a thermoregulatory lyocell fiber in accordance with this invention.

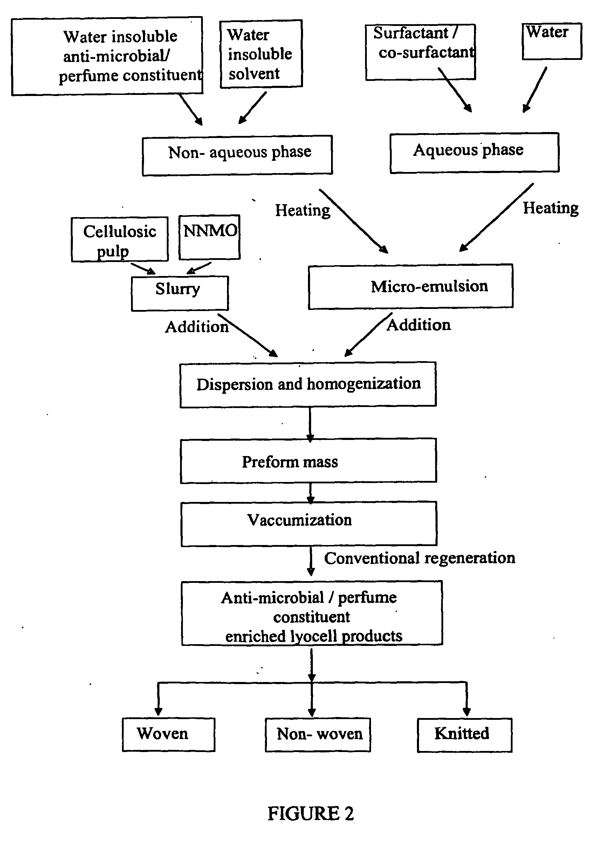

In the accompanying drawing, Figure 2 illustrates the block diagram showing the method steps involved in the process of making an antimicrobial or perfumed lyocell fiber in accordance with this invention.

Figure 3 illustrates the cross-sectional view of thermoregulatory lyocell fibers prepared in accordance with this invention which shows uniform distribution of micro-reservoirs of thermoregulatory constituents entrapped across the length of the fibers.

Figure 4 illustrates the cross-sectional view of antimicrobial lyocell fibers prepared in accordance with this invention which shows uniform distribution of micro-reservoirs of antimicrobial constituents entrapped across the length of the fibers.

Figure 5 illustrates the cross-sectional view of perfumed lyocell fibers prepared in accordance with this invention which shows uniform distribution of micro-reservoirs of perfumed constituents entrapped across the length of the fibers.

### Detailed Description:

A decade of Lyocell technology development has yielded many new opportunities in textile applications due to interesting properties of the solvent spun cellulosic lyocell fibers, especially good mechanical properties and fibrillation resistance. Its versatility and desirable properties provide many advantages, both functional and aesthetic. In terms of performance and properties, lyocell is also friendly to the environment. The resulting fiber, lyocell, is both biodegradable and recyclable Lyocell has strength and durability. Lyocell blends well with other fibers including wool, silk, cotton, linen, nylon, and polyester. It successfully takes many finishes, both functional and those designed to achieve different surface effects, and dyes easily. Overall, lyocell is a versatile fiber with many desirable properties.

Conventional method for manufacture of lyocell involves following major steps:

### Step 1. Creating a solvent solution from wood pulp

The wood pulp is obtained from a variety of sources, such as wood chips or even large rolls of paper that have been finely shredded, is the basic starting material for manufacture of lyocell fibers. In case of manufacture of lyocell no further chemical treatment of the wood pulp is needed thereby making the process environment friendly.

The wood pulp solution is produced in a straight solvation process by dissolving wood pulp at high temperatures and pressure in a recyclable non-toxic organic solvent solution of amine oxide, particularly N-methylmorpholine N-oxide, (NNMO).

Lyocell is manufactured by a "closed loop" spinning process which conserves energy and water.

### Step 2. Spinning lyocell fiber from the solvent solution

Before being formed into fibers, the lyocell polymer dope, is in a thick liquid state. In the spinning process this liquid is forced through a spinneret, which resembles a large shower head.

The clear, viscous resultant solution is filtered and extruded into an aqueous bath of dilute amine oxide, and coagulated into fiber form.

### Step 3. Washing lyocell fiber to remove solvents

The fiber is then washed before it is dried and twisted or spun into yarns, which are woven or knitted into fabrics and garments.

### Step 4. Drying fiber and producing yarns

When the filament dries or solidifies, it forms what is called a continuous filament fiber. Many continuous filaments of specific thicknesses collected in a large bundle called a "tow". A tow may contain over a million continuous filaments. The tow bundle is then crimped, is then mechanically cut into staple fibers, usually ranging in length from 1 to 6-1/2 inches, depending how they are to be used.

Strands of continuous filament fibers are then twisted together to form a continuous filament yarn, which is then woven or knit into fabric.

### Step 5. Finishing to produce lyocell fabric

The fabric is treated with an enzyme that attacks cellulose fibers. Home laundry detergents containing such enzymes are also used for treatment of the fabric for better finishing purposes. This enzyme dissolves the split-end hairs from the fiber surface. The fiber is then washed and agitated again. The resulting fabric is similar in texture and drape to sueded silk or sueded rayon found in fashion apparel. Fabrics processed this way can usually be machine washed and line dried successfully.

Alternatively, the filaments so obtained are stretched to straighten out the fibers which are further blended using standard equipment. The blended fibers are laid in to a web followed by Consolidation of the web to obtain Non- woven Lyocell Fabric.

This invention provides lyocell fibers with additional desirable properties which have enormous demand namely, "thermoregulatory activity", "antimicrobial activity", and "perfumed fibers".

Thermoregulatory constituents improve the thermal insulation of the lyocell fibers during changes in environmental temperature conditions. Thermoregulatory constituents are phase change materials which improve the thermal performance of clothing by absorbing or releasing heat when subjected to heating or cooling during a phase change.

Thermoregulatory lyocell product abates the transient effect on a human body's heat loss when the person wearing such fabric is exposed to temperature swings resulting from change in environmental conditions.

Thermoregulatory constituents that are used include nonadecane, eicosane, heptadecane, octadecane, hexadecane, pentadecane and myristyl alcohol.

Thermoregulatory ability of the thermoregulatory constituents is governed by several factors which include melting point, quantity of the thermoregulatory constituent in the fabric, different combinations and proportions in which the thermoregulatory constituents are blended together, type of the polymer used in the fabric, thickness of the fabric, distribution of the thermoregulatory constituent in the fabric, and the process used for incorporating the thermoregulatory constituent in the fabric.

Specific thermoformable properties of the fabric with respect to the desired temperature zones are adjusted by careful blend of the thermoregulatory constituents in specific proportions. The thermoregulatory constituent is selected such that it has a melting point that falls within the range of temperature in which thermal regulation is desired to be achieved. Thus, if thermal regulation is desired in the range of 21 -30 °C, then the melting point of the thermoregulatory constituent must fall within this range. Again if the fabric is to be used in climatic regions, where regulation is desired below 20 C, then the thermoregulatory constituent having melting point below 20 °C is used. The thermoregulatory lyocell fabric acts as a transient thermal barrier by protecting the wearer of this fabric from the effects of cold or hot environments. When such thermoregulatory lyocell fabric is subjected to heating from the sun or a hot environment, it will absorb transient heat as it changes phase from solid to liquid, and it will prevent the temperature of the fabric from rising by keeping it constant at the melting point temperature of the thermoregulatory constituent. Once thermoregulatory constituent has completely melted, its transient effect will cease and the temperature of the fabric will rise. In a similar manner, when a thermoregulatory fabric is subjected to a cold environment where the temperature is below its crystallization point, it will interrupt the cooling effect of the fabric structure by changing phase from liquid to solid, and the temperature of fabric will be kept constant at the crystallization point. Once all the thermoregulatory constituents have crystallized, the fabric temperature will drop, and the thermoregulatory constituents will have no effect on the fabric's thermal performance.

Thus, the thermal performance of a thermoregulatory constituent is a function of phase change temperature, the amount of thermoregulatory constituent and the amount of energy it absorbs or releases during a phase change.

In accordance with one embodiment of this invention, there is provided a thermoregulatory lyocell formulation meant for manufacture of lyocell products comprising:
- at least one non-water-soluble property-modifying constituent;
- at least one water soluble non-cationic surfactant having HLB value in the range of 9 to 40, said surfactant being in the range of 0.001 to 10 % of the mass of the formulation,
- cellulosic pulp in the range of about 3% to 35% of the mass of the formulation
- NNMO in the range of about 60 to 80% of the mass of the formulation; and
- water in the range of about 0% to 20 % with respect to the mass of the formulation.

Typically, the property modified formulation is a thermoregulatory formulation.

Therefore, in the embodiment where the formulation is a thermoregulatory formulation, the formulation comprises:
- at least one non-water-soluble thermoregulatory constituent having a melting point lying in a predetermined range of temperature said constituent being in the range of about 0.01 to 20% of the mass of the formulation;
- at least one water soluble non-cationic surfactant having HLB value in the range of 9 to 40,said surfactant being in the range of 0.001 to 10 % of the mass of the formulation, - • cellulosic pulp in the range of about 3% to 35% of the mass of the formulation
- NNMO in the range of about 60 to 80% of the mass of the formulation; and
- water in the range of about 0% to 20 % with respect to the mass of the formulation.

Typically, the thermoregulatory constituent is at least one selected from a group consisting of nonadecane, eicosane, heptadecane, octadecane, hexadecane, pentadecane decyl alcohol, lauryl alcohol and myristyl alcohol.

In accordance with one aspect of the invention, the thermoregulatory constituent, the solvent and the surfactant are processed to form micro-reservoirs which are embedded into the body of the formulation.

The invention also extends to a thermoregulatory lyocell fiber, yarn and fabric manufactured from a formulation in accordance with this invention.

In accordance with this invention the above described thermoregulatory formulation meant for manufacture of lyocell products is capable of being manufactured by the process as described herein below:
- selecting a non-water-soluble thermoregulatory constituent having a melting point lying in a predetermined range and heating said constituent to form a liquid nonaqueous phase;
- dissolving and stirring a surfactant, optionally with a co-surfactant, in water to obtain an aqueous phase;
- admixing and homogenizing the non-aqueous phase with the aqueous phase to obtain a micro-emulsion;
- mixing together cellulosic pulp and NNMO solution to form a slurry;
- dispersing the micro-emulsion in the slurry to obtain a preform mass wherein the antimicrobial constituent is in the form of evenly dispersed micro-reservoirs;
- vaccumising the preform mass to remove water under 7 to 10 mm of Hg and a temperature over 90°C to obtain the formulation.

In accordance with another embodiment of this invention, the property modified formulation is an antimicrobial formulation.

In the embodiment now of an antimicrobial formulation, the formulation typically comprises:
- at least one non-aqueous solvent in the range of about 0.01 to 20% of the mass of the formulation,
- at least one water insoluble antimicrobial constituent soluble in said solvent, said constituent being in the range of about 0.001 to 10% of the mass of the formulation, at least one water soluble nonionic surfactant having HLB value in the range of 9 to 40, said surfactant being in the range of 0.001 to 10% of the mass of the formulation,
- cellulosic pulp in the range of about 3% to 35% of the mass of the formulation,
- N-METHYL-MORPHOLINE-N-OXIDE (NNMO) in the range of about 60 to 80% of the mass of the formulation; and
- water in the range of about 0% to 20 % with respect to the mass of the formulation.

Typically, the antimicrobial constituent is at least one selected from a group consisting of 2-Methyl-4-isothiazolin-3-one, water, Phenoxyethanol Benzoic acid, 4-Hydroxy-methyl ester, Hydroxy-benzoic acid and propyl ester), o- (2-naphthyl) methyl (3-methylphenyl) thiocarbamate, 5-chloro-2-(2,4-dichlorophenoxy)pheno1,4,5-dichloro-n-octyl-4-isothiazoline-3-one[DCOIT] 2-n-octyl-4-isothiazolin-3-one, 1-phenoxy propan-2-ol, pentachlorophenol, 5-chloro-2-dichlorophenoxy phenol, clotrimazole, p-chloro-m-xylenol and chloroquinaldol.

In accordance with one aspect of the invention, the antimicrobial constituent, the solvent and the surfactant are processed to form micro-reservoirs which are embedded into the body of the formulation.

The invention also extends to an antimicrobial lyocell fiber, yarn and fabric manufactured from a formulation in accordance with this invention.

In accordance with this invention the above described antimicrobial formulation meant for manufacture of lyocell products is capable of being manufactured by the process as described herein below:
- admixing a water-insoluble antimicrobial constituent with a non-aqueous solvent followed by heating the resulting mixture to obtain a liquid non-aqueous phase;
- dissolving and stirring a surfactant, optionally with a co-surfactant, in water to obtain an aqueous phase;
- heating the aqueous-phase;
- mixing the aqueous phase with the non-aqueous phase in the liquid state to form a admixture and homogenizing to obtain a micro-emulsion;
- mixing together cellulosic pulp and N-METHYL-MORPHOLINE-N-OXIDE (NNMO) solution to form a slurry;
- dispersing the micro-emulsion in the slurry to obtain a preform mass wherein the antimicrobial constituent is embedded in evenly dispersed micro-reservoirs;
- vaccumising the preform mass to remove water under 7 to 10 mm of Hg and temperature of over 90°C to obtain the formulation.

In accordance with yet another embodiment of this invention, the property modified formulation is a perfumed formulation.

In the embodiment now of a perfumed formulation, the formulation typically comprises:
- at least one non-aqueous solvent in the range of about 0.01 to 20% of the mass of the formulation,
- at least one water insoluble perfume constituent soluble said solvent, in the range of about 0.001 1 to 10% of the mass of the formulation,
- at least one water soluble non-cationic surfactant having HLB value in the range of 9 to 40, in the range of range of 0.001 to 10% of the mass of the formulation,
- cellulosic pulp in the range of about 3% to 35% of the mass of the formulation
- NNMO in the range of about 60 to 80% of the mass of the formulation; and
- water in the range of about 0% to 20 % with respect to the mass of the formulation.

Typically, the perfume constituent is at least one selected from a group consisting of citrus musk, floral woody, citrus musk woody, fresh bouquet, musk ,floral musk, cedarwood oil, sandalwood oil, lemon oil, orange oil, rose oil, jasmine oil and lavender oil.

Typically, the surfactant is at least one non-ionic or anionic surfactant selected from a group of non-ionic or anionic surfactants consisting of alkyl phenoxy ethoxylated non-ionic surfactants and ethoxylated alkyl alcohol surfactants, Polyethylene-block-Poly propylene glycol-block-polyethylene glycol and Ethylenediamine tetrakis(propylene oxide-block-ethylene oxide) tetrol.

Typically, the solvent for antimicrobial constituent and the perfumed constituent is at least one solvent selected from a group of solvents consisting of C₁₀-C₄₄ alkanes (paraffinic hydrocarbons), polyethylene, polypropylene, polypropylene glycol, polytetramethylene glycol, polypropylene malonate, polyneopentyl glycol sebacate, polypentane glutarate, polyvinyl myristate, polyvinyl stearate, polyvinyl laurate, polyhexadecyl methacrylate, polyoctadecyl methacrylate, polyethylene oxides, polyethylene glycols, Arachidyl alcohol, behenyl alcohol, Selachyl alcohol, chimimyl alcohol, polyesters, di-iso decyl phthalate, benzyl alcohol, C4 - C30 aliphatic alcohols ,C4 -C30 saturated hydrocarbons, C₄ -C₃₀ monounsaturated hydrocarbons, natural oils and mineral oil paraffins.

Typically, the surfactant is at least one non-ionic surfactant selected from a group of non-ionic surfactants consisting of alkyl phenoxy ethoxylated non-ionic surfactants and ethoxylated alkyl alcohol surfactants, Polyethylene-block-Poly propylene glycol-block-polyethylene glycol and Ethylenediamine tetrakis (propylene oxide-block-ethylene oxide) tetrol.

Typically, the alkyl phenoxy ethoxylated non-ionic surfactant is at least one selected from a group consisting of Polyoxyethylene(8) isooctylphenyl ether, Nonylphenol polyethylene glycol ether, Polyoxyethylene(9) nonylphenyl ether, Polyoxyethylene(1O) isooctylphenyl ether, Polyoxyethylene(12) nonylphenyl ether, Polyoxyethylene(12) isooctylphenyl ether, Polyoxyethylene(40) nonylphenyl ether, Polyoxyethylene(40) isooctylphenyl ether, Polyoxyethylene(1OO) nonylphenyl ether, Polyoxyethylene(150) dinonylphenyl ether, Surfonic N-95(Poly (oxy-1, 2-ethanediyl), alpha- (nonyl phenyl)-omega-hydroxyl-glycol ether) ( nonylphenol 9.5-mole ethoxylate) , Surfonic N-95(Poly (oxy-1, 2-ethanediyl), alpha-(nonyl phenyl)-omega-hydroxyl-glycol ether) ( nonylphenol 9.5-mole ethoxylate) , Surfonic N-120(nonylphenol 12-mole ethoxylate) , Surfonic N-150 (nonylphenol 15-mole ethoxylate), Surfonic N-200 (nonylphenol 20-mole ethoxylate) , Surfonic N-300( nonylphenol 30-mole ethoxylate) , Surfonic N-400 nonylphenol 40-mole ethoxylate, Surfonic LF-7 (Alkyl polyoxyalkylene ether) , Surfonic LF- 17 (ethoxylated and propoxylated linear primary 12-14 carbon number alcohol), Igepal CO-630 (nonylphenoxy poly(ethyleneoxy)ethanol,branched), Surfonic DNP -40 (dinonylphenol ethoxylate glycol ether).

In accordance with one preferred embodiment of the invention, the HLB value of the surfactant is between 16 and 40.

In accordance with one aspect of the invention, the perfume constituent, the solvent and the surfactant are processed to form micro- reservoirs which are embedded into the body of the formulation.

Typically, the average mean size of the micro-reservoir is in the range of 5 nm to 2000 nm.

The invention also extends to a perfume lyocell fiber, yarn and fabric manufactured from a formulation in accordance with this invention.

In accordance with this invention the above described perfumed formulation meant for manufacture of lyocell products is capable of being manufactured by the process as described herein below:
- admixing a water-insoluble perfume constituent with a non-aqueous solvent followed by heating the resulting mixture between 25°C and 95°C to obtain nonaqueous phase;
- dissolving and stirring a surfactant, optionally with a co-surfactant, in water to obtain an aqueous phase;
- heating the aqueous-phase;
- mixing the aqueous phase with the non-aqueous phase in the liquid state to form a admixture and homogenizing to obtain a micro-emulsion;
- mixing together cellulosic pulp and NNMO to form a slurry;
- dispersing the micro-emulsion in the slurry to obtain a preform mass wherein the antimicrobial constituent is embedded in evenly dispersed micro-reservoirs;
- vaccumising the preform mass to remove water under 7 to 10 mm of Hg and at temperature over 100°C to obtain the formulation.

In accordance with the invention, various perfume constituents from different sources are used. The typical perfume comprises a plurality of individual perfume active compounds, although it can consist essentially of a single perfume ingredient. It is well within the scope of the perfumer of ordinary skill in the art changing ingredients in the perfume component and/or modifying the relative levels of perfume ingredients.

In case of synthetic perfume constituents, a perfume constituent is a composition of one or more synthetic compounds. Various types of chemical compounds are commonly known for perfumery uses including: phenolic compounds; essential oils; aldehydes; ketones; polycyclic compounds; esters; and alcohols. Many perfume ingredients contain a combination of functional groups and can be categorized under two or more of the above classes. Various plant derived perfume constituents generally include variety of phyto-chemicals along with the principle active phyto-constituent.

From the standpoint of the perfumer, it is convenient to consider the perfume ingredients in terms of the type of aroma it imparts rather than the particular chemical class or classes it may fall within. The perfume components herein can be formulated to provide a variety of odor categories: a non-exclusive list includes woody, sweet, citrus, floral, fruity, animal, spice, green, musk, balsamic, chemical, and mint. A variety of exemplary perfume ingredients are described below for several of the commonly used odor categories, long with their representative (but not necessarily exclusive) chemical categories.

Woody perfume ingredients include cedarwood oil (essential oil), guaicwood oil (essential oil), gamma ionone (ketone), sandalwood oil (essential oil), and methyl cedrylone (ketone). Sweet perfume ingredients include coumarin (ketone), vanillin (4 hydroxy-3methoxy benzaldehyde) (aldehyde), ethyl maltol (Alcohol), phenyl acetaldehyde (aldehyde), heliotropin (aldehyde), acetophenone (ketone), and dihydrocoumarin (ketone). Citrus perfume ingredients include orange oil (essential oil), lemon oil (essential oil), citral (aldehyde), beta methyl naphthyl ketone (ketone), terpinyl acetate (ester), nonyl aldehyde (aldehyde), terpineol (alcohol), and dihydromyrcenol (alcohol). Floral perfume ingredients include a variety of floral subcategories, such as rose, lavender, jasmin, and muguet. Rose perfume ingredients include geranyl acetate (ester), geraniol (alcohol), citronelyl acetate (ester), phenyl ethyl alcohol (alcohol), alpha damascone (ketone), beta damascone (ketone), geranium oil (essential oil), and natural rose oil (essential oil). Lavender perfume ingredients include dihydro terpinyl acetate (ester), ethyl hexyl ketone (ketone), lavandin (essential oil), lavender (essential oil), tetra hydro linalool (alcohol), linalool (alcohol), and linalyl acetate (ester). Jasmin perfume ingredients include benzyl acetate (ester), butyl cinnamic aldehyde (aldehyde), methyl benzoate (ester), natural jasmin oil (essential oil), methyl dihydro jasmonate (ester). Muguet perfume ingredients include cycalmen aldehyde (aldehyde), benzyl salycilate (ester), hydroxycitronellol (alcohol), citronellyl oxyacetaldehyde (aldehyde), and hydroxy aldehyde (aldehyde). Fruity perfume ingredients include ethyl-2-methyl butyrate (ester), allyl cyclohexane propionate (ester), amyl acetate (ester), ethyl acetate (ester), gamma decalactone (ketone), octaiactone (ketone), undecalactone (aldehyde), ethyl aceto acetate (ester), benzaldehyde (aldehyde). Animal perfume ingredients include methyl phenyl acetate (ester), indol (2,3, benzpyrrole) (phenolic), creosol (phenolic), iso butyl quinolin (phenolic), and androstenol (phenolic). Spice perfume ingredients include anisic aldehyde (aldehyde), anise (essential oil), clove oil (essential oil), eugenol (phenolic), iso eugenol (phenolic), thymol (phenolic), anethol (phenolic), cinnamic alcohol (alcohol), and cinnamic aldehyde (aldehyde). Green perfume ingredients include beta gamma hexenol (alcohol), brom styrol (alcohol), dimethyl benzyl carbinol (alcohol), methyl heptine cart onate (ester), cis-3-hexenyl acetate (ester), and galbanum oil (essential oil). Musk perfume ingredients often also function as fixatives. Examples of musk include glaxolide (phenol), cyclopentadecanolide (phenol), musk ketone (ketone), ambrettolide (phenol), tonalid (phenol), and ethylene brassylate (ester). Balsamic perfume ingredients include fir balsam (essential oil, peru balsam (essential oil), and benzoin resinoid (essential oil). Mint perfume ingredients include laevo carvone (ketone), menthol (alcohol), methyl salicylate (ester), peppermint oil (essential oil), spearmint oil (essential oil), eucalyptus (essential oil), anisyl acetate (ester), methyl chavicol (alcohol). Nonionic Surfactant Chemical perfume ingredients include benzyl alcohol (alcohol), diproplene glycol (alcohol), ethanol (alcohol), and benzyl benzoate (ester) , Andrane, Cedramber, Decyl methyl ether, Galaxolid, Grisalv, Indolarome-soli, Orange flower ether, Ozofleu, Phenafleu, Tobacaro, Paracresyl methyl Ether, Karana, Cyclogalbanat, Piconi, Iso-cyclemone, Iso E supe, Celestolide-soli, Fleuramon" ihydroisojasmon, Isojasmon, Tonali, Methyl Ionone , Dulcinyl-soli, Acetanisol, Vetikon, Undecylenic Aldehyd, lilia, Vanilli, Cinnamic Alcoho, Iso-Eugeno, Tetra-Hydro Geranio, Calone 10 % DE, Dihydro-isojasmon, Galaxolide, Karanal 10% DE, Yara Yara (Nerolin) , Decyl methyl ether, Ethyl Methyl Phenyl. Glycidate, Para-Cresyl Phenyl acetate, Undecalactone, Clonal IFF

Preferred plant derived perfume compositions are provided herein below: Rose oil: beta-damascenone, beta-damascone, beta-ionone and rose oxide; Lavender oil: linalool and linalyl acetate; Orange oil: d-limonene; Jasmine oil: benzyl acetate, linalool, benzyl alcohol, indole, benzyl benzoate, cis-jasmone, geraniol and methyl anthranilate; Sandalwood oil: santalols, santene, nortricycloekasantalene and α- and β-santalenes, santenol and teresantalol; Cedarwood oil: β-methyl-δ-3- tetrahydroacetophenone, p-methyl acetophenone, cis- and trans- atlantones, α- and β-himalchenes, ar-dihydroturmerone and himachalol.

The perfume constituent impart peculiar pleasant aroma or fragrance to the fibers and ultimately to the fabric or garments made from these fibers.

In accordance with this invention, only non-aqueous solvent is used which is typically selected from a group of solvents consisting of C₁₀-C₄₄ alkanes (paraffinic hydrocarbons), polyethylene, polypropylene, polypropylene glycol, polytetramethylene glycol, polypropylene malonate, polyneopentyl glycol sebacate, polypentane glutarate, polyvinyl myristate, polyvinyl stearate, polyvinyl laurate, polyhexadecyl methacrylate, polyoctadecyl methacrylate, polyethylene oxides, polyethylene glycols, Arachidyl alcohol, behenyl alcohol, Selachyl alcohol, chimimyl alcohol, polyesters, di-iso decyl phthalate, diethyl phthalate and other alkyl phthalates, benzyl alcohol, C4 -C30 aliphatic alcohols ,C4 -C30 saturated hydrocarbons, C₄ -C₃₀ monounsaturated hydrocarbons, natural oils and mineral oil paraffins.

Preferably, paraffin wax either alone or in combination with stearyl alcohol is used as the non-aqueous solvent.

In accordance with this invention only water soluble non cationic surfactant/co-surfactant is used. Typically, the non-ionic surfactant is selected from a group consisting of alkyl phenoxy ethoxylated non-ionic surfactants and ethoxylated alkyl alcohol surfactants, Polyethylene-block-Poly propylene glycol-block-polyethylene glycol and Ethylenediamine tetrakis(propylene oxide-block-ethylene oxide) tetrol. Typically, the alkyl phenoxy ethoxylated non-ionic surfactant is at least one selected from a group consisting of Polyoxyethylene(8) isooctylphenyl ether, Nonylphenol polyethylene glycol ether, Polyoxyethylene(9) nonylphenyl ether, Polyoxyethylene(1O) isooctylphenyl ether, Polyoxyethylene(12) nonylphenyl ether, Polyoxyethylene(12) isooctylphenyl ether, Polyoxyethylene(40) nonylphenyl ether, Polyoxyethylene(40) isooctylphenyl ether, Polyoxyethylene(1OO) nonylphenyl ether, Polyoxyethylene(150) dinonylphenyl ether, Surfonic N-95(Poly (oxy-1, 2-ethanediyl), alpha- (nonyl phenyl)-omega-hydroxyl-glycol ether) ( nonylphenol 9.5-mole ethoxylate) , Surfonic N-95(Poly (oxy-1, 2-ethanediyl), alpha-(nonyl phenyl)-omega-hydroxyl-glycol ether) ( nonylphenol 9.5-mole ethoxylate) , Surfonic N-120(nonylphenol 12-mole ethoxylate) , Surfonic N- 150 (nonylphenol 15-mole ethoxylate), Surfonic N-200 (nonylphenol 20-mole ethoxylate) , Surfonic N-300( nonylphenol 30-mole ethoxylate) , Surfonic N-400 nonylphenol 40-mole ethoxylate, Surfonic LF-7 (Alkyl polyoxyalkylene ether) , Surfonic LF- 17 (ethoxylated and propoxylated linear primary 12-14 carbon number alcohol), Igepal CO-630 (nonylphenoxy poly(ethyleneoxy) ethanol,branched), Surfonic DNP-40 (dinonylphenol ethoxylate glycol ether).

The non-ionic surfactant is selected such that the lipophilic portion of the non-ionic surfactant is compatible with the perfume constituent and the surfactant forms oil in water micro-emulsion. Surfactants with HLB values within the range of 9 to 40 are used. Preferably, non-ionic surfactants with HLB values more than 13 are used.

In accordance with one preferred embodiment of the invention, the HLB value of the surfactant is between 16 and 40.

Typically, the alkali used in the formulation is sodium hydroxide. Typically, the alkalinity of the formulation is in the range of about 5% to 6%, preferably 5.6%.

In accordance with one aspect of the invention, the perfume constituent, the solvent and the surfactant are processed to form micro-reservoirs which are embedded into the body of the formulation. The perfumed lyocell contains uniformly dispersed micro-reservoirs throughout the body of the fibers. The micro-reservoirs are discrete, nano-sized structures without any definite geometrical shape.

Typically, the average mean size of the micro-reservoir is in the range of 5 nm to 2000 nm.

The invention also extends to a perfume lyocell fiber, yarn and fabric manufactured from a formulation in accordance with this invention.

Before arriving at the optimum concentration of the surfactant to be used, cloud point of the aqueous phase is determined. Furthermore, alkalinity of the aqueous phase matches with that of the viscous polymer dope thereby avoiding any drastic change in the alkalinity during the emulsification and homogenization step.

Typically, the melted non-aqueous phase containing perfume constituent in a non-aqueous solvent along with aqueous phase containing surfactants is emulsified using high speed mixers such as Ultraturrex or a mechanical emulsifier; a colloid mill; a high pressure homogenizer and an ultrasonic emulsifier to form a micro-emulsion. The micro-emulsion may contain further additional perfume constituents, if desired.

The active ingredients are released from the micro-reservoir into the lyocell matrix. The structure of micro-reservoir, lyocell and surrounding conditions determine the release rate of the perfume constituent. The molecules of the volatile perfume constituents migrate from micro-reservoirs to the surrounding primarily by diffusion. The perfume constituent is released from the matrix in a controlled release manner.

The preform mass obtained as above can be further spun into filaments, in a spin bath using conventional regeneration media. A typical conventional regeneration media comprises 100-140 gm/liter sulfuric acid, 100-370 gm/liter salt (sodium sulfate) and retardants (0-60 gm/liter) aluminum sulfate, zinc sulfate.

The filaments so obtained are stretched to straighten out the fibers which are further subjected to 18% sulfuric acid treatment at 95°C for 15 min, washing, desulfurization with 0.6 sodium hydroxide (gm/liter) at 80°C for 15 min, bleaching with sodium hypochloride (1.2 gm/liter) at 45°C for 15 min, followed by water washing at 30°C for 15 minutes, neutralization with acetic acid (1gm/liter) at 45°C for 15 min and drying at 80 -120°C.

The lyocell fibers made as above can be further subjected to post treatment to make fabric which typically involves Converting to Yarn in blend or pure, Converting to Warp Beam, Sizing, Fabric Manufacturing, Desizing, Scouring, Bleaching, Dyeing, Finishing, and Garmenting.

Alternatively, the filaments so obtained are stretched to straighten out the fibers which are further blended using standard equipment. The blended fibers are laid in to a web followed by Consolidation of the web to obtain Non- woven Lyocell Fabric.

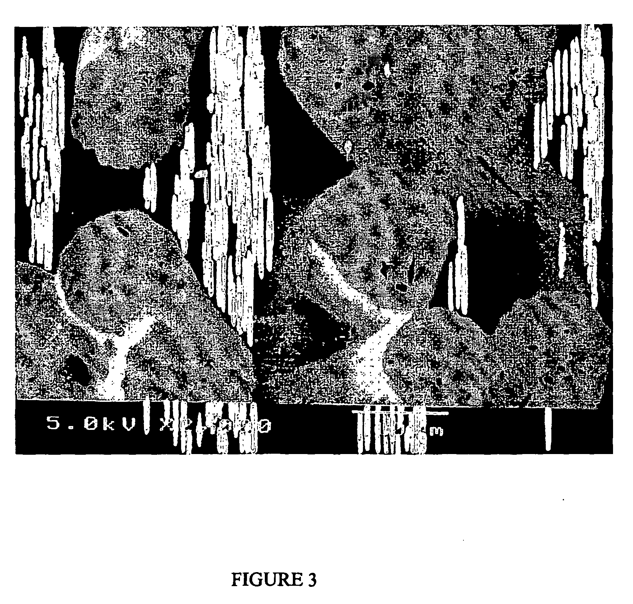

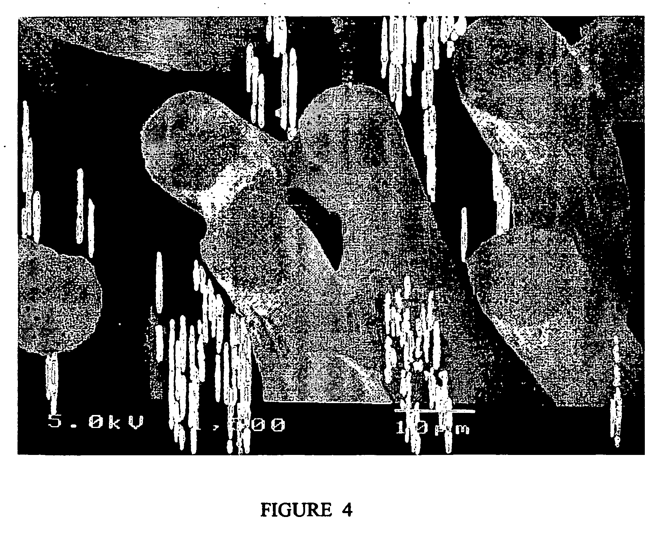

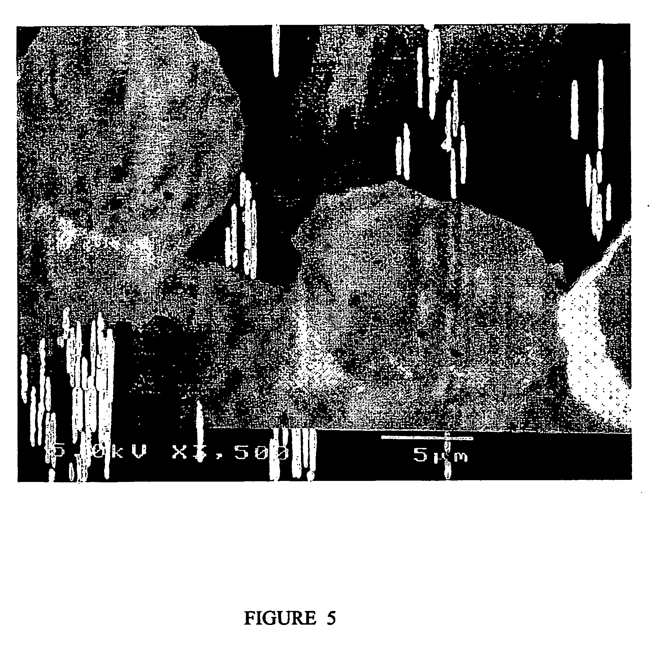

The lyocell product made from the formulation in accordance with this invention contains uniformly dispersed micro-reservoirs throughout the mass which is shown in Figures 3, 4, and 5.

The thermoregulatory lyocell fibers contain the entrapped thermoregulatory constituent in releasable form. Microscopic examination of the micro-reservoirs in the lyocell fibers is shown in Fig 3.

Thermoregulatory fabric improves the comfort of people irrespective of the fluctuations in the temperature of their surroundings on either side. Besides this, thermoregulatory fabric also improves the comfort of people as their body goes through a very active state (high metabolic production) to an inactive state on an intermittent basis in a cold environment. This feature is of particular relevance for outdoor sportsmen.

The resultant lyocell fabric containing property-modifying constituents such as thermoregulatory constituents, antimicrobial constituents, and perfumed constituents are tested. Linear Density (Denier) of the lyocell Fibers is determined by using standard ASTM Test Method (D 1577). The denier of the standard lyocell fiber (lyocell fiber without any property-modifying constituents) and the property-modified lyocell fiber remains the same. Thus addition of the constituents does not change the linear density of the lyocell fibers.

Tensile strength and Young's modulus of lyocell fiber sample is tested on an Instron tensile testing machine as per the ASTM C 1557-03 procedure at ambient temperature.

Visual appearances of the property-modified fiber is evaluated by methods as prescribed in AATCC 124. As far as parameters like % Loss in Dry Tenacity and % loss in dry elongation are concerned, these remain the same in the property-modified lyocell fiber and the standard fiber. Incorporation of property-modifying constituent in accordance with this invention does not affect the visual appearance of the fiber.

Feel of the fiber: The property-modified lyocell fiber as prepared in accordance with this invention offers the same feel effect as is observed in case of standard lyocell fiber).

Another important concern in textile industry is dye-ability of the fabric, which is tested by comparing the dyeability of the property-modified fabric and the standard lyocell fabric. Dyeability of the property-modified lyocell fibers as prepared in accordance with this invention remains the same as that of the standard lyocell fiber.

The lyocell products made from the formulation in accordance with this invention contains uniformly dispersed micro-reservoirs throughout the mass which are shown in Figures 3, 4, and 5.

The invention will now be described with the help of the following non-limiting examples.

First Set of Examples for thermoregulatory fibers:

### Example 1

### Example I A- Preparation of micro emulsion

Myristyl alcohol (50gm) was heated until it melts to form a molten liquid.

Surfonic N-400 nonylphenol 40-mole ethoxylate (surfactant) (5.6 gm) was dissolved and stirred in water 105ml to obtain 110.6gm of aqueous phase. The aqueous phase (110.6 gm) and the molten liquid (50 gm) were homogenized in a high speed mixer (Ultraturrex) to obtain a micro-emulsion (160.6 gm).

Example 1 B- Preparation fiber and fabric Cellulosic pulp (839.4 gm) and 10600 gm of 50% NNMO solution were mixed to form lyocell slurry. The micro-emulsion as prepared in Example IA was evenly dispersed in the slurry to obtain a preform mass. The homogenized preform mass was vaccumisied to remove water under 10 mm of Hg and at temperature 110 °C to give Lyocell polymer dope (839.4 gm). The lyocell polymer dope was further spun in a spin bath of dilute NNMO solution, and coagulated into fiber form.

The filaments so obtained were washed in water and dried at 100°C. The lyocell fiber thus obtained contained micro-reservoirs having the entrapped releasable thermoregulatory constituents. Although the micro reservoirs did not have any specific shape or size, they were found to be uniformly distributed throughout the body of the fiber.

### Example 2

### Example 2A

### Preparation of micro emulsion

Cetyl alcohol (50gm ) was heated to from a molten liquid. Surfonic N- 150 (nonylphenol 15-mole ethoxylate) (surfactant) (16.8 gm ) was dissolved and stirred in water 111.1ml to obtain 127. 9gm of clear aqueous phase The aqueous phase(127. 9gm ) and the molten liquid (50 gm) were homogenized in a high speed mixer (Ultraturrex) to obtain an thermoregulatory formulation in the form of micro-emulsion. ( 177.9 gm)

### Example 2 B

The micro-emulsion as prepared in Example 2A was added to lyocell slurry, vacuumised at high temperature to give lyocell Polymer Dope (containing 822. 1gm cellulose) and was spun or extruded into various forms such as fiber or film or cast into various shapes using the regeneration media as described in example 1.

### Example 3

### Example 3 A

Heptadecane (50gm ) was heated to from a molten liquid.

Surfonic N-150 (nonylphenol 15-mole ethoxylate) (surfactant) (16.8 gm ) was dissolved and stirred in water 1 11. 1 ml to obtain 127. 9gm of clear aqueous phase The aqueous phase(127. 9gm ) and the nolten liquid (50 gm) were homogenized in a high speed mixer (Ultraturrex) to obtain an thermoregulatory formulation in the form of micro-emulsion. (177.9 gm )

### Example 3 B

The micro-emulsion as prepared in Example 2A was added to lyocell slurry, vacuumised at high temperature to give lyocell Polymer Dope (contaiing 822. 1gm cellulose) and was spun or extruded into various forms such as fiber or film or cast into various shapes using the regeneration media as described in example 1.

### Example 4

### Example 4 A

### Preparation of thermoregulatory formulation

Heptadecane (35gm) myristyl alcohol (15gm) was heated to form a molten liquid. Surfonic N- 300( nonylphenol 30-mole ethoxylate) (surfactant) (5.6gm) was dissolved and stirred in water ( 105ml) to obtain 110.6 gm of clear aqueous phase The aqueous phase(110.6gm) and the molten liquid (50 gm) were homogenized in a high speed mixer (Ultraturrex) to obtain a micro-emulsion.

### Example 4 B

The micro-emulsion as prepared in Example 4A was added to lyocell slurry, vacuumised at high temperature to give lyocell Polymer Dope (containing 839.4 gm cellulose) and was spun or extruded into various forms such as fiber or film or cast into various shapes using the regeneration media as described in example 1.

### Example 5

### Example 5A

### Preparation of thermoregulatory formulation

Nonadecane (750 gm) was heated to form a molten liquid. Surfonic N-200 (nonylphenol 20-mole ethoxylate) (surfactant) (50.4gm) was dissolved and stirred in water (1500ml) to obtain 1550 gm of clear aqueous phase The aqueous phase (1550 gm) and the molten liquid ( 750 gm) were homogenized in a high speed mixer (Ultraturrex) to obtain a micro-emulsion.(2.3kg)

### Example 5 B

The micro-emulsion as prepared in Example 5A was added to lyocell slurry, vacuumised at high temperature to give lyocell Polymer Dope (containing 1.866Kg cellulose) and was spun or extruded into various forms such as fiber or film or cast into various shapes using the regeneration media as described in example 1.

### Example 6

### Example 6 A

### Preparation of thermoregulatory formulation

Nonadecane (50gm) was melted to form a molten liquid. Surfonic N-200 (nonylphenol 20-mole ethoxylate) (surfactant) (11.2gm) was dissolved and stirred in water 210ml to obtain

221.2gm of clear aqueous phase.

The aqueous phase(221.2gm) and the mixture 1OOgm were homogenized in a high speed mixer (Ultraturrex) to obtain a micro-emulsion. (321.2gm)

### Example 6 B

The micro-emulsion as prepared in Example 6A was added to lyocell slurry, vacuumised at high temperature to give lyocell Polymer Dope (containing 1.678Kg cellulose) and was spun or extruded into various forms such as fiber or film or cast into various shapes using the regeneration media as described in example 1.

### Example 7

### Example 7 A

### Preparation of thermoregulatory formulation

Eicosane 50 gm was melted to form a molten liquid. Surfonic N-300( nonylphenol 30-mole ethoxylate) (surfactant) (16.8gm) was dissolved and stirred in water 111.1 ml to obtain 127.9gm of clear aqueous phase The aqueous phase (127.9gm ) and the mixture 50gm were homogenized in a high speed mixer (Ultraturrex) to obtain a micro-emulsion. (177.9gm)

### Example 7 B

The micro-emulsion as prepared in Example 7A was added to lyocell slurry, vacuumised at high temperature to give lyocell Polymer Dope (containing 822.1 gm cellulose) and was spun or extruded into various forms such as fiber or film or cast into various shapes using the regeneration media as described in example 1.

### Example 8

### Example 8 A

### Preparation of thermoregulatory formulation

Eicosane (25gm) and Nonadecane (25gm) were melted together to form a molten liquid.

Surfonic N-300( nonylphenol 30-mole ethoxylate) (surfactant) (5.6 gm) was dissolved and stirred in water (105ml) to obtain (110.6 gm) of clear aqueous phase.
The aqueous phase (110.6 gm) and the mixture (50 gm) were homogenized in a high speed mixer (Ultraturrex) to obtain a micro-emulsion. (160.6gm )

### Example 8 B

The micro-emulsion as prepared in Example 8A was added to lyocell slurry, vacuumised at high temperature to give lyocell Polymer Dope (containing 839.4gm cellulose) and was spun or extruded into various forms such as fiber or film or cast into various shapes using the regeneration media as described in example 1.

### Example 9

### Example 9A

### Preparation of micro emulsion

Nonadecane (50gm) was heated until it melts to form a molten liquid. Surfonic N-400 nonylphenol 40-mole ethoxylate (surfactant) ( 5.6gm ) was dissolved and stirred in water 105ml to obtain HO.ógm of aqueous phase. The aqueous phase (110.6gm) and the molten liquid (50 gm) were homogenized in a high speed mixer (Ultraturrex) to obtain a micro-emulsion (160.6 gm ).

### Example 9 B- Preparation fiber and fabric

The micro-emulsion as prepared in Example IA was added to lyocell slurry, vacuumised at high temperature to give lyocell Polymer Dope containing 839.4 gm cellulose and the resulting thermoregulatory enriched lyocell polymer dope was homogenized. The homogenized lyocell polymer dope and was spun or extruded into various forms such as fiber or film or cast into various shapes using the regeneration media as described in example 1.

### Example 10

### Example 10 A

### Preparation of micro emulsion

Myristyl alcohol (50gm ) was heated to from a molten liquid. Surfonic N-150 (nonylphenol 15-mole ethoxylate) (surfactant) (16.8 gm ) was dissolved and stirred in water 111.1ml to obtain 127. 9gm of clear aqueous phase The aqueous phase(127. 9gm ) and the molten liquid (50 gm) were homogenized in a high speed mixer (Ultraturrex) to obtain an thermoregulatory formulation in the form of micro-emulsion. (177.9 gm)

### Example 10 B

The micro-emulsion as prepared in Example 2A was added to lyocell slurry, vacuumised at high temperature to give lyocell Polymer Dope (containing 822. 1 gm cellulose) and was spun or extruded into various forms such as fiber or film or cast into various shapes using the regeneration media as described in example 1.

### Example 11

### Example 11 A

Eicosane (50gm) was heated to from a molten liquid. Surfonic N-150 (nonylphenol 15-mole ethoxylate) (surfactant) (16.8 gm) was dissolved and stirred in water 111.1ml to obtain 127. 9gm of clear aqueous phase The aqueous phase (127. 9gm ) and the molten liquid (50 gm) were homogenized in a high speed mixer (Ultraturrex) to obtain an thermoregulatory formulation in the form of micro-emulsion. (177.9 gm)

### Example 11 B

The micro-emulsion as prepared in Example 2A was added to lyocell slurry, vacuumised at high temperature to give lyocell Polymer Dope (containing 822.

1gm cellulose) and was spun or extruded into various forms such as fiber or film or cast into various shapes using the regeneration media as described in example 1.

### Example 12

### Example 12 A

Preparation of thermoregulatory formulation Heptadecane (50gm) was heated to form a molten liquid. Surfonic N-300 (nonylphenol 30-mole ethoxylate) (surfactant) (5.6gm) was dissolved and stirred in water (105ml) to obtain

110.6 gm of clear aqueous phase.

The aqueous phase (110.6gm) and the molten liquid (50 gm) were homogenized in a high speed mixer (Ultraturrex) to obtain a micro-emulsion.

### Example 12 B

The micro-emulsion as prepared in Example 4A was added to lyocell slurry, vacuumised at high temperature to give lyocell Polymer Dope (containing 839.4 gm cellulose) and was spun or extruded into various forms such as fiber or film or cast into various shapes using the regeneration media as described in example 1.

### Example 13

### Example 13A

### Preparation of thermoregulatory formulation

Nonadecane (500 gm) and hectadecane (250) were heated to form a molten liquid. Surfonic N- 200 (nonylphenol 20-mole ethoxylate) (surfactant) (50.4gm) was dissolved and stirred in water (1500ml) to obtain 1550.4 gm of clear aqueous phase

The aqueous phase(1550gm) and the molten liquid ( 750 gm) were homogenized in a high speed mixer (Ultraturrex) to obtain a micro-emulsion.(2.3kg)

### Example 13 B

The micro-emulsion as prepared in Example 5A was added to lyocell slurry, vacuumised at high temperature to give lyocell Polymer Dope (containing 1.866Kg cellulose) and was spun or extruded into various forms such as fiber or film or cast into various shapes using the regeneration media as described in example 1.

### Example 14

### Example 14 A

### Preparation of thermoregulatory formulation

Nonadecane (40gm) and heptadecane (10) gm were melted to form a molten liquid. Surfonic N-200 (nonylphenol 20-mole ethoxylate) (surfactant) (11.2gm) was dissolved and stirred in water 210ml to obtain 221.2gm of clear aqueous phase.

The aqueous phase(221.2gm) and the mixture 100gm were homogenized in a high speed mixer (Ultraturrex) to obtain a micro-emulsion. (321.2gm )

### Example 14 B

The micro-emulsion as prepared in Example 6A was added to lyocell slurry, vacuumised at high temperature to give lyocell Polymer Dope (containing 1.678Kg cellulose ) and was spun or extruded into various forms such as fiber or film or cast into various shapes using the regeneration media as described in example 1.

### Example 15

### Example 15 A

### Preparation of thermoregulatory formulation

Myristyl alcohol (30gm ) and heptadecane(20gm) were melted to form a molten liquid.Surfonic N-300( nonylphenol 30-mole ethoxylate) (surfactant) (16.8gm) was dissolved and stirred in water 111.1ml to obtain 127.9gm of clear aqueous phase The aqueous phase ( 127.9gm ) and the mixture 50gm were homogenized in a high speed mixer (Ultraturrex) to obtain a micro-emulsion. (177.9gm)

### Example 15 B

The micro-emulsion as prepared in Example 7A was added to lyocell slurry, vacuumised at high temperature to give lyocell Polymer Dope (containing 822.1 gm cellulose) and was spun or extruded into various forms such as fiber or film or cast into various shapes using the regeneration media as described in example 1.

### Example 16

### Example 16 A

### Preparation of thermoregulatory formulation

Eicosane (25gm) and Hectadecane (25gm) were melted together to form a molten liquid. Surfonic N-300( nonylphenol 30-mole ethoxylate) (surfactant) (5.6 gm) was dissolved and stirred in water (105ml) to obtain (110.6 gm) of clear aqueous phase.

The aqueous phase ( 1 10.6 gm) and the mixture (50 gm) were homogenized in a high speed mixer (Ultraturrex) to obtain a micro-emulsion. (160.6gm)

### Example 16 B

The micro-emulsion as prepared in Example 8A was added to lyocell slurry, vacuumised at high temperature to give lyocell Polymer Dope (containing 839.4gm celllulose) and was spun or extruded into various forms such as fiber or film or cast into various shapes using the regeneration media as described in example 1.

### Second Set of Examples for antimicrobial fibers:

### Example 1

Example IA- Preparation of micro emulsion Stearyl alcohol (225 gms) was heated until it melts and (50gm) of 2-Methyl-4-isothiazolin-3-one, water, phenoxyethanol Benzoic acid, 4-Hydroxy-methyl ester, Hydroxy-benzoic acid and propyl ester was admixed to form a molten mixture (275gm). Surfonic N-400 nonylphenol 40-mole ethoxylate (surfactant) (28 gm ) was dissolved and stirred in water (525 ml) to obtain (553 gm)of aqueous phase. The aqueous phase (553 gm) and the mixture (275 gm) were homogenized in a high speed mixer (Ultraturrex) to obtain a micro-emulsion (828 gm ).

### Example 1 B- Preparation fiber and fabric

1000 gm of cellulosic pulp and 12670 gm of 50% NNMO solution were mixed to form a slurry (13670gm).The micro-emulsion as prepared in Example IA was evenly dispersed in the slurry to obtain a preform mass (14500 gm). The homogenized preform mass was vaccumised to remove water under 10 mm of Hg and at temperature 110 °C ,was further spun in a spin bath of dilute amine oxide, and coagulated into fiber form. The fiber was then washed before it was dried and spun into a fabric.

The lyocell fiber thus obtained contained micro-reservoirs having the entrapped releasable antimicrobial constituents. Although the micro reservoirs did not have any specific shape or size, they were found to be uniformly distributed throughout the body of the fiber.

### Example 2

### Example 2A- Preparation of micro emulsion

Myristyl alcohol (225 gm) was heated until it melts and (60gm) of 2-Methyl-4-isothiazolin-3 -one, water, phenoxyethanol Benzoic acid, 4-Hydroxy-methyl ester, Hydroxy-benzoic acid and propyl ester was admixed to form a molten mixture (275gm).

Surfonic N-400 nonylphenol 40-mole ethoxylate (surfactant) (28 gm ) was dissolved and stirred in water (525 ml) to obtain (553 gm)of aqueous phase. The aqueous phase (553 gm) and the mixture (275 gm) were homogenized in a high speed mixer (Ultraturrex) to obtain a micro-emulsion (828 gm ).

### Example 2 B

### Preparation of fiber

990 gm of cellulosic pulp and 12540 gm of 50% NNMO solution were mixed to form a slurry (13530gm).The micro-emulsion as prepared in Example 2A was evenly dispersed in the slurry to obtain a preform mass (14360 gm) and was spun into fiber as described in example 1.

### Example 3

### Example3 A

### Preparation of antimicrobial formulation

Polyvinyl laurate (200 gms) and cetyl alcohol ( 25 gm) was heated until it melts and (100 gm) of 2-Methyl-4-isothiazolin-3-one, water, phenoxyethanol Benzoic acid, 4-Hydroxy-methyl ester, Hydroxy-benzoic acid and propyl ester was admixed to form a molten mixture (325gm).

Surfonic N-400 nonylphenol 40-mole ethoxylate (surfactant) (28 gm ) was dissolved and stirred in water (525 ml) to obtain (553 gm)of aqueous phase. The aqueous phase (553 gm) and the mixture (325 gm) were homogenized in a high speed mixer (Ultraturrex) to obtain a micro-emulsion (878 gm).

### Example 3 B- Preparation of fiber

922 gm of cellulosic pulp and 11680 gm of 50% NNMO solution were mixed to form a slurry (12600 gm).The micro-emulsion as prepared in Example 3 A was evenly dispersed in the slurry to obtain a preform mass (13478 gm) and was spun into fiber as described in example 1.

### Example 4

### Example 4 A

Preparation of antimicrobial formulation Polyvinyl laurate (250 gm) and cetyl alcohol (25 gm) was heated until it melts and (50 gm) of chloroquinaldol was admixed to form a molten mixture (325gm). Surfonic N-400 nonylphenol 40-mole ethoxylate (surfactant) (28 gm ) was dissolved and stirred in water (525 ml) to obtain (553 gm)of aqueous phase.

The aqueous phase (553 gm) and the mixture (325 gm) were homogenized in a high speed mixer (Ultraturrex) to obtain a micro-emulsion (878 gm).

### Example 4 B- Preparation fiber and fabric

1400 gm of cellulosic pulp and 17730 gm of 50% NNMO solution were mixed to form a slurry (19130gm).The micro-emulsion as prepared in Example 4A was evenly dispersed in the slurry to obtain a preform mass (20010 gm) and was spun into fiber as described in example1.

### Example 5

### Example 5 A

### Preparation of antimicrobial formulation

Polypropylene glycol (100 gm) and paraffin wax (175 gm) were heated until it melts and (50 gm) of chloroquinaldol was admixed to form a molten mixture (325gm).

Surfonic N-400 nonylphenol 40-mole ethoxylate (surfactant) (28 gm ) was dissolved and stirred in water (525 ml) to obtain (553 gm)of aqueous phase. The aqueous phase (553 gm) and the mixture (325 gm) were homogenized in a high speed mixer (Ultraturrex) to obtain a micro-emulsion (878 gm).

### Example 5 B- Preparation fiber and fabric

1200 gm of cellulosic pulp and 15200 gm of 50% NNMO solution were mixed to form a slurry (16400 gm).The micro-emulsion as prepared in Example 5 A was evenly dispersed in the slurry to obtain a preform mass (17280 gm) and was spun into fiber as described in example 1.

### Example 6

### Example 6 A Preparation of antimicrobial formulation

Stearyl alcohol (200gm) and polyethylene(HDPE) (lOOgm) were melted together to form a molten liquid. To this o- (2-naphthyl) methyl (3-methylphenyl) thiocarbamate (Tolnaftate) (200gm) to form a molten mixture (500gm). Surfonic N-400 nonylphenol 40-mole ethoxylate (surfactant) (28 gm ) was dissolved and stirred in water (525 ml) to obtain (553 gm)of aqueous phase. The aqueous phase (553 gm) and the mixture (500 gm) were homogenized in a high speed mixer (Ultraturrex) to obtain a micro-emulsion (1053 gm).

### Example 6 B- Preparation fiber and fabric

947 gm of cellulosic pulp and 12000 gm of 50% NNMO solution were mixed to form a slurry (12947gm).The micro-emulsion as prepared in Example 6A was evenly dispersed in the slurry to obtain a preform mass (13995 gm) and was spun into fiber as described in example 1.

### Example 7

### Example 7 A

### Preparation of antimicrobial formulation

Polyvinyl stearate (150 gm) and paraffin wax (1OOgm) were melted together to form a molten liquid. To this 5-chloro-2-(2,4-dichlorophenoxy)phenol (Triclosan) (150 gm) was added to form a molten mixture (400 gm). Surfonic N-400 nonylphenol 40-mole ethoxylate (surfactant) (28 gm ) was dissolved and stirred in water (525 ml) to obtain (553 gm)of aqueous phase. The aqueous phase (553 gm) and the mixture (400 gm) were homogenized in a high speed mixer (Ultraturrex) to obtain a micro-emulsion (953 gm).

### Example 7 B- Preparation fiber and fabric

1047 gm of cellulosic pulp and 13260 gm of 50% NNMO solution were mixed to form a slurry (14310 gm).The micro-emulsion as prepared in Example 7A was evenly dispersed in the slurry to obtain a preform mass (15260 gm) and was spun into fiber as described in example 1.

### Example 8

### Example 8 A

### Preparation of antimicrobial formulation

Polypentane glutarate (300 gm) was melted to form a molten liquid. To this (100gm) 5-chloro-2-(2,4-dichlorophenoxy)phenol (Triclosan) was added to form a mixture (400 gm).Surfonic N-400 nonylphenol 40-mole ethoxylate (surfactant) (28 gm) was dissolved and stirred in water (525 ml) to obtain (553 gm)of aqueous phase. The aqueous phase (553 gm) and the mixture (400 gm) were homogenized in a high speed mixer (Ultraturrex) to obtain a micro-emulsion (953 gm).

### Example 8 B

1547 gm of cellulosic pulp and 19590 gm of 50% NNMO solution were mixed to form a slurry (21140gm).The micro-emulsion as prepared in Example 8 A was evenly dispersed in the slurry to obtain a preform mass (22090 gm) and was spun into fiber as described in example 1.

### Example 9

### Example 9 A

### Preparation of antimicrobial formulation

Stearyl alcohol (250 gm) and paraffin wax (200 gm) were melted together to form a molten liquid. To this (50gm) 4,5-dichloro-n-octyl-4-isothiazoline-3-one[DCOIT] was added to form a mixture (500 gm). Surfonic N-400 nonylphenol 40-mole ethoxylate (surfactant) (28 gm) was dissolved and stirred in water (525 ml) to obtain (553 gm) of aqueous phase. The aqueous phase (553 gm) and the mixture (500 gm) were homogenized in a high speed mixer (Ultraturrex) to obtain a micro-emulsion (1053 gm).

### Example 9 B

1147 gm of cellulosic pulp and 14530 gm of 50% NNMO solution were mixed to form a slurry (15680gm).The micro-emulsion as prepared in Example 8A was evenly dispersed in the slurry to obtain a preform mass (16730 gm) and was spun into fiber as described in example 1.

### Example 10

### Example 10 A

### Preparation of micro emulsion

Stearyl alcohol (150 gm) and polyvinyl laurate (150gm) were melted together to form a molten liquid. To this molten liquid, (200gm) of 2-Methyl-4-isothiazolin-3-one, water, Phenoxyethanol Benzoic acid, 4-Hydroxy-methyl ester, Hydroxy-benzoic acid and propyl ester) was added to form a mixture (500gm). Surfonic N-400 nonylphenol 40-mole ethoxylate (surfactant) (28 gm) was dissolved and stirred in water (525 ml) to obtain (553 gm) of aqueous phase.

The aqueous phase (553 gm) and the mixture (500 gm) were homogenized in a high speed mixer (Ultraturrex) to obtain a micro-emulsion (1053 gm).

### Example 10 B

1347 gm of cellulosic pulp and 17060 gm of 50% NNMO solution were mixed to form a slurry (18410gm).The micro-emulsion as prepared in Example 10 A was evenly dispersed in the slurry to obtain a preform mass (19460 gm) and was spun into fiber as described in example 1.

Third Set of Examples for perfumed fibers:

### Example 1

### Example 1 A- Preparation of micro emulsion

Stearyl alcohol (225 gms) was heated until it melts and (50gm) of citrus musk was admixed to form a molten mixture (275gm). Surfonic N-400 nonylphenol 40-mole ethoxylate (surfactant) (28 gm) was dissolved and stirred in water (525 ml) to obtain (553 gm)of aqueous phase. The aqueous phase (553 gm) and the mixture (275 gm) were homogenized in a high speed mixer (Ultraturrex) to obtain a micro-emulsion (828 gm).

### Example 1 B- Preparation fiber and fabric

1000 gm of cellulosic pulp and 3200 gm of NNMO solvent were mixed to form a slurry (4250gm).The micro-emulsion as prepared in Example IA was evenly dispersed in the slurry to obtain a preform mass (5000 gm). The homogenized preform mass was vaccumisied to remove water under 10 mm of Hg and at temperature 110 °C ,was further spun in a spin bath of dilute amine oxide, and coagulated into fiber form. The fiber was then washed before it was dried and spun into a fabric.

The lyocell fiber thus obtained contained micro-reservoirs having the entrapped releasable antimicrobial constituents. Although the micro reservoirs did not have any specific shape or size, they were found to be uniformly distributed throughout the body of the fiber.

### Example 2

### Example 2A- Preparation of micro emulsion

Myristyl alcohol (225 gms) was heated until it melts and (60gm) of floral woody was admixed to form a molten mixture (275gm). Surfonic N-400 nonylphenol 40-mole ethoxylate (surfactant) (28 gm) was dissolved and stirred in water (525 ml) to obtain (553 gm)of aqueous phase. The aqueous phase (553 gm) and the mixture (275 gm) were homogenized in a high speed mixer (Ultraturrex) to obtain a micro-emulsion (828 gm).

### Example 2 B

### Preparation of fiber

990 gm of cellulosic pulp and 3200 gm of NNMO solvent were mixed to form a slurry (4250gm).The micro-emulsion as prepared in Example 2A was evenly dispersed in the slurry to obtain a preform mass (5000 gm) and was spun into fiber as described in example 1.

### Example 3

### Example3 A

### Preparation of antimicrobial formulation

Polyvinyl laurate (200 gms) and cetyl alcohol (25 gm) was heated until it melts and (100gm) of woody musk was admixed to form a molten mixture (325gm). Surfonic N-400 nonylphenol 40-mole ethoxylate (surfactant) (28 gm) was dissolved and stirred in water (525 ml) to obtain (553 gm)of aqueous phase. The aqueous phase (553 gm) and the mixture (325 gm) were homogenized in a high speed mixer (Ultraturrex) to obtain a micro-emulsion (878 gm).

### Example 3 B- Preparation of fiber

922 gm of cellulosic pulp and 3200 gm of NNMO solvent were mixed to form a slurry (4200gm).The micro-emulsion as prepared in Example 3A was evenly dispersed in the slurry to obtain a preform mass (5000 gm) and was spun into fiber as described in example 1.

### Example 4

### Example 4 A

### Preparation of antimicrobial formulation

Polyvinyl laurate (250 gms) and cetyl alcohol (25 gm) was heated until it melts and (50 gm) of fresh bouquet was admixed to form a molten mixture (325gm). Surfonic N-400 nonylphenol 40-mole ethoxylate (surfactant) (28 gm) was dissolved and stirred in water (525 ml) to obtain (553 gm)of aqueous phase. The aqueous phase (553 gm) and the mixture (325 gm) were homogenized in a high speed mixer (Ultraturrex) to obtain a micro-emulsion (878 gm).

### Example 4 B- Preparation fiber and fabric

1400 gm of cellulosic pulp and 2800 gm of NNMO solvent were mixed to form a slurry (4200gm).The micro-emulsion as prepared in Example 4A was evenly dispersed in the slurry to obtain a preform mass (5000 gm) and was spun into fiber as described in example 1.

### Example 5

### Example 5 A

### Preparation of antimicrobial formulation

Polypropylene glycol (100 gm) and paraffin wax (175 gm) were heated until it melts and (50 gm) of floral musk was admixed to form a molten mixture (325gm).

Surfonic N-400 nonylphenol 40-mole ethoxylate (surfactant) (28 gm) was dissolved and stirred in water (525 ml) to obtain (553 gm)of aqueous phase. The aqueous phase (553 gm) and the mixture (325 gm) were homogenized in a high speed mixer (Ultraturrex) to obtain a micro-emulsion (878 gm).

### Example 5 B- Preparation fiber and fabric

1200 gm of cellulosic pulp and 3000 gm of NNMO solvent were mixed to form a slurry (4200gm).The micro-emulsion as prepared in Example 5A was evenly dispersed in the slurry to obtain a preform mass (5000 gm) and was spun into fiber as described in example 1.

### Example 6

### Example 6 A

### Preparation of antimicrobial formulation

Stearyl alcohol (200 gm) and polyethylene (HDPE) (100 gm) were melted together to form a molten liquid. To this (200gm) of citrus musk was added to form a molten mixture (500 gm).

Surfonic N-400 nonylphenol 40-mole ethoxylate (surfactant) (28 gm) was dissolved and stirred in water (525 ml) to obtain (553 gm)of aqueous phase. The aqueous phase (553 gm) and the mixture (500 gm) were homogenized in a high speed mixer (Ultraturrex) to obtain a micro-emulsion (1053 gm).

### Example 6 B- Preparation fiber and fabric

947 gm of cellulosic pulp and 3000 gm of NNMO solvent were mixed to form a slurry (3947gm).The micro-emulsion as prepared in Example 6A was evenly dispersed in the slurry to obtain a preform mass (5000 gm) and was spun into fiber as described in example 1.

### Example 7

### Example 7 A

### Preparation of antimicrobial formulation

Polyvinyl stearate (150 gm) and paraffin wax (100gm) were melted together to form a molten liquid. To this citrus musk woody (150 gm) was added to form a molten mixture (400 gm). Surfonic N-400 nonylphenol 40-mole ethoxylate (surfactant) (28 gm) was dissolved and stirred in water (525 ml) to obtain (553 gm) of aqueous phase. The aqueous phase (553 gm) and the mixture (400 gm) were homogenized in a high speed mixer (Ultraturrex) to obtain a micro-emulsion (953 gm).

### Example 7 B- Preparation fiber and fabric

1047 gm of cellulosic pulp and 3000 gm of NNMO solvent were mixed to form a slurry (3947gm).The micro-emulsion as prepared in Example 7A was evenly dispersed in the slurry to obtain a preform mass (5000 gm) and was spun into fiber as described in example 1.

### Example 8

### Example 8 A

### Preparation of antimicrobial formulation

Polypentane glutarate (300 gm) was melted to form a molten liquid. To this (100 gm) floral woody was added to form a mixture (400 gm). Surfonic N-400 nonylphenol 40-mole ethoxylate (surfactant) (28 gm) was dissolved and stirred in water (525 ml) to obtain (553 gm)of aqueous phase. The aqueous phase (553 gm) and the mixture (400 gm) were homogenized in a high speed mixer (Ultraturrex) to obtain a micro-emulsion (953 gm).

### Example 8 B

1547 gm of cellulosic pulp and 2500 gm of NNMO solvent were mixed to form a slurry (3947gm).The micro-emulsion as prepared in Example 8A was evenly dispersed in the slurry to obtain a preform mass (5000 gm) and was spun into fiber as described in example 1.

### Example 9

### Example 9 A

### Preparation of antimicrobial formulation

Stearyl alcohol (250 gm) and paraffin wax (200 gm) were melted together to form a molten liquid. To this (50gm) of fresh bouquet was added to form a mixture (500 gm). Surfonic N-400 nonylphenol 40-mole ethoxylate (surfactant) (28 gm) was dissolved and stirred in water (525 ml) to obtain (553 gm) of aqueous phase. The aqueous phase (553 gm) and the mixture (500 gm) were homogenized in a high speed mixer (Ultraturrex) to obtain a micro-emulsion (1053 gm).

### Example 9 B

1147 gm of cellulosic pulp and 2900 gm of NNMO solvent were mixed to form a slurry (3947gm).The micro-emulsion as prepared in Example 8A was evenly dispersed in the slurry to obtain a preform mass (5000 gm) and was spun into fiber as described in example 1.

### Example 10

### Example 10 A

### Preparation of micro emulsion

Stearyl alcohol (150 gm) and polyvinyl laurate (150gm) were melted together to form a molten liquid. To this molten liquid, (200gm) of lavender oil was added to form a mixture (500gm). Surfonic N-400 nonylphenol 40-mole ethoxylate (surfactant) (28 gm) was dissolved and stirred in water (525 ml) to obtain (553 gm) of aqueous phase. The aqueous phase (553 gm) and the mixture (500 gm) were homogenized in a high speed mixer (Ultraturrex) to obtain a micro-emulsion (1053 gm).

### Example 10 B

1347 gm of cellulosic pulp and 2700 gm of NNMO solvent were mixed to form a slurry (3947gm).The micro-emulsion as prepared in Example 10 A was evenly dispersed in the slurry to obtain a preform mass (5000 gm) and was spun into fiber as described in example 1.

### Testing procedures:

The lyocell products as prepared in the above examples (to 10 of each set) were tested by using following test procedures:
1) Linear Density (Denier) of the lyocell Fibers was determined by using standard ASTM Test Method (D 1577).

The denier of the standard lyocell fiber and the property-modified lyocell fibers as prepared in accordance with examples IB of each set was found to be uniform (1.5 denier) irrespective of the type and quantity of the property-modifying constituents.
2) Tensile strength and Young's modulus of lyocell fiber samples were tested on an Instron tensile testing machine as per the ASTM C 1557-03 procedure at ambient temperature.
3) Emulsion stability: The stability of micro-emulsions as prepared in the above examples, was evaluated by keeping the same under observation in measuring cylinders for 3 days. During this period no phase separation was observed.
4) Feel of the fabric: The lyocell fabrics as prepared in the above examples and standard fabric were randomly given to twenty subjects and they were asked to evaluate the texture and feel of the fiber. The test fiber material was interchanged several times amongst the human subjects. Collective results as submitted by the human subjects confirmed that nobody could distinguish between the property-modified lyocell fabrics prepared in accordance with the Examples provided above and the standard fabric.
5) Dyeability: The property-modified lyocell fabrics as prepared in the above examples and the standard fabric as described above were dyed uniformly with reactive dyes. No noticeable difference as to the Dyeability of the two respective lyocell fabrics, with and without property-modified constituent was reported.
6) Visual appearance of the property-modified lyocell fiber was evaluated by methods as prescribed in AATCC 124. As far as parameters like % Loss in Dry Tenacity and % loss in dry elongation are concerned, these remained the same(< 10% and < 15% respectively)in the property-modified lyocell fiber and the standard fiber
7) Determination of enthalpy of the fabric specimen: the thermoregulatory properties of the specimen fabrics/fibers as prepared in examples 1 to 10 of the first set were evaluated by measuring respective enthalpies of the specimen. The enthalpies were measured using DSC (Differential scanning calorimetry) technique. The recorded enthalpies of the fiber and fabric obtained in examples 1 to 10 are provided in the Table 1.

**Table 1.**

| Specimen No. | Enthalpy J/g Fiber | Enthalpy J/g Fabric |
|---|---|---|
| 1 | 4.3 | 4.29 |
| 2 | 5.4 | 5.38 |
| 3 | 6.6 | 6.63 |
| 4 | 6 | 5.98 |
| 5 | 37 | 36.3 |
| 6 | 4.3 | 4.1 |
| 7 | 8.4 | 8.41 |
| 8 | 7.2 | 7.19 |
| 9 | 6.5 | 6.4 |
| 10 | 5.2 | 5.24 |
| 11 | 8.4 | 8.35 |
| 12 | 6.5 | 6.55 |
| 13 | 34.1 | 34.6 |
| 14 | 3.1 | 3.0 |
| 15 | 5.5 | 5.6 |
| 16. | 6.5 | 6.5 |

### 8. Testing of thermoregulatory Activity:

Free flowing robes made to fit the physique of twenty human volunteers, selected at random between ages 16 to 56, were made from undyed thermoregulatory Lyocell fabric prepared in accordance with this invention. Simultaneously, identical robes with same design were also made from undyed standard fabric (Lyocell fabric without any thermo regulatory constituents).

A temperature monitored room was selected where the temperature could be precisely controlled. The temperature in the room was set at 21°C. The twenty human volunteers were requested to wear the robes and assemble in the room and be there in the room for a period of 30 min. They were made to randomly wear either a standard robe (robe made from standard fabric) or a robe made from the fabric of this invention. But they were not informed about the type of the robe that was being worn. After 30 minutes, all the volunteers were asked to step out into the outside non-air-conditioned environment, where the temperature was 28°C and they were asked to observe and note the time when they felt warm in the area covered by the robe.

Thereafter, all the volunteers switched their robes, ie: The volunteer given a robe of standard fabric, was allotted a robe made from the fabric of this invention and vise-a- versa. They were again asked to go back into the room and remain there for 30 min. and again step out into the external environment and again observe and note the time when they started feeling warm.

The volunteers were then asked to give an evaluation of the time required to feel the warmth in both the instances. The results of the experiments were as follows.

Seventeen volunteers opined that they felt warm in the standard fabric, at least on an average of 3 minutes quicker than the fabric of this invention.

Two volunteers could not sense significant difference in time and one volunteer recorded an earlier feeling of warmth in case of the fabric of this invention. In case of direct comparison between the robes, 17 volunteers opined that they felt cooler and more comfortable wearing a ward-robe made from the fabric of this invention.

Three volunteers expressed no significant difference between the two. There was no volunteer who provided any reverse finding. Similar test was conducted in which the volunteers were made to go from a hotter external environment at 30°C to an air-conditioned environment maintained at 21°C. All of the volunteers expressed that they felt warmer and more comfortable in the robe made from the fabric of this invention and the reported response time for feeling cold was on an average 3 min. longer.

It is thus concluded that the fabric made in accordance with this invention exhibits thermoregulatory effect in either situation, ie when there is a rise in temperature and when there is a fall in the temperature.

### 9. Testing of antimicrobial constituent enriched fiber /fabrics

The antimicrobial constituent enriched lyocell fabrics as prepared in the above examples were tested for antimicrobial activity by various test procedures which included antimicrobial assays used to determine or confirm the effectiveness of treatments applied to medical devices, medical and commercial textiles, and other products.

Minimum sample requirements 9 square inches or 6 inches long, per test AATCC 100 (Part I) is a qualitative test for antibacterial activity. Test lyocell fiber/fabric specimens were placed into contact with a nutrient agar which had been streaked with either *Staphylococcus aureus* or *Escherichia coli* bacterial culture. Samples are inoculated with *Staphylococcus* and evaluated for percent reduction of the bacteria over selected contact periods of 1 - 24 hours. Turnaround Time is usually 5 days. The specimens were then incubated at a temperature 37 °C for a period of time of 24 hours. After the 24 hour incubation period, the samples were visually checked for the growth of bacteria.

The AATCC 147/100, Part III protocol provides a qualitative test for antifungal activity. Lyocell fiber/ fabric specimens were subjected to the growth of a common fungus, *Aspergillus niger,* on Sabouraud Dextrose agar. Prewet specimens were inoculated and incubated at 28 °C for seven days. Specimens were then assessed for growth of the fungus. ASTM E2180-01 test method was used for testing inhibitory mold activity of the lyocell product (fiber /fabric) prepared in accordance with this invention.

All the specimen lyocell fiber and fabrics as obtained in examples 1 to 10 of the second set were tested for antimicrobial activity by following the above mentioned test protocols. The results of the above mentioned test protocols are provided in the following tables:

**Table 2**

| Antimicrobial Activity of Lyocell Fibers | | |
|---|---|---|
| **Sr. No.** | **% kill of bacteria** | **Test results** |
| Example 1 | 99.8 | Not observed |
| Microbe tested : S. aureus | | |
| Example 2 | 99.5 | Not observed |
| Microbe tested : S. aureus | | |
| Example 3 | 98.6 | Not observed |
| Microbe tested : E. coli | | |
| Example 4 | 99 | Not observed |
| Microbe tested: S. aureus | | |
| Example 5 | 99.2 | Not observed |
| Microbe tested: S Aureus | | |
| Example 7 | 99.4 | Not observed |
| Microbe tested : S. aureus | | |
| Example 8 | 99.6 | Not observed |
| Microbe tested : S Aureus | | |
| Example 9 | 99 | Not observed |
| Microbe tested : S. aureus | | |
| Example 10 | 99 | Not observed |
| Microbe tested : S. aureus | | |

**Table 3**

| **Antimicrobial Activity of Lyocell Fabric** | | |
|---|---|---|
| **Sr. No.** | **% kill of bacteria** | **Test results** |
| Example 1 | 99.1 | Not observed |
| Microbe tested : S. aureus | | |
| Example 2 | 98.8 | Not observed |
| Microbe tested : S. aureus | | |
| Example 3 | 98.1 | Not observed |
| Microbe tested : S Aureus | | |
| Example 4 | 98.5 | Not observed |
| Microbe tested : E Coli | | |
| Example 5 | 97 | Not observed |
| Microbe tested: E Coli | | |
| Example 7 | 97.2 | Not observed |
| Microbe tested : E Coli | | |
| Example 8 | 96.2 | Not observed |
| Microbe tested : E. coli | | |
| Example 9 | 98.4 | Not observed |
| Microbe tested : S. aureus | | |
| Example 10 | 98.3 | Not observed |
| Microbe tested: S. aureus | | |

The lyocell fiber and fabric lyocell fabric specimens obtained in examples 6 and 9 of the second set contained antifungal agent and their antifungal activity was determined by AATCC 147 part III and in case of the all the specimens no fungal growth was observed meaning that all the specimen exhibited excellent antifungal activity. Furthermore, inhibitory mould activity of these specimen was tested by ASTM E 2180-01 test protocol and good inhibitory activity against Aspergillus niger was recorded.

The test fabrics made from these fibers thus exhibited significant antimicrobial activity both towards bacteria and fungi.

### 10. Perfume retension test:

Twenty pieces of standard size 20cmX 20cm cut out from the freshly prepared lyocell fiber as prepared in accordance with examples of the third set. Another set of Twenty pieces of the same size cut out of from the same fiber were subjected to 20 hot water washes with the intermittent drying period of 2 hrs. The drying was carried out in natural sunlight at temperature within the range of 25 to 45°C. The specimens so prepared were randomly distributed to human subjects for testing the aroma of the specimen. The specimen was interchanged amongst the subjects. No noticeable difference in odor of the two respective lyocell fiber specimens was reported and therefore it is concluded that the lyocell fiber specimen retained the perfume additive even after exposure to varying conditions.

While considerable emphasis has been placed herein on the specific steps of the preferred embodiment, it will be appreciated that many alterations can be made and that many modifications can be made in the preferred embodiment without departing from the principles of the invention. These and other changes in the preferred embodiment as well as other embodiments of the invention will be apparent to those skilled in the art from the disclosure herein, whereby it is to be distinctly understood that the foregoing descriptive matter is to be interpreted merely as illustrative of the invention and not as a limitation.

## Claims

1. A formulation meant for manufacture of lyocell products obtainable by a process comprising the following steps:
• selecting a non-water-soluble constituent from the group consisting of thermoregulatory constituents in an amount of 0.01 to 20%, antimicrobial constituents in an amount of 0.001 to 10% and perfume constituents in an amount of 0.001 to 10%, said amount being expressed with respect to the total mass of the formulation, mixing with at least one non-aqueous solvent in the case of antimicrobial constituents and perfume constituents and heating said constituent to form a liquid non-aqueous phase;
• dissolving and stirring at least one water soluble non-cationic surfactant having HLB value in the range of 9 to 40, said surfactant being in the range of 0.001 to 10% of the mass of the formulation, in water to obtain an aqueous phase;
• admixing and homogenizing the non-aqueous phase with the aqueous phase to obtain a micro-emulsion;
• mixing together cellulosic pulp in the range of 3 to 35% of the mass of the formulation and N-METHYL-MORPHOLINE-N-OXIDE (NNMO) solution, where NNMO is in the range of about 60 to 80% of the mass of the formulation, to form a slurry;
• dispersing the micro-emulsion in the slurry to obtain a preform mass wherein the non-water-soluble constituent is in the form of evenly dispersed micro-reservoirs having an average mean size in the range of 5 - 2,000 nm; and
• vaccumising the preform mass to remove water under 7 to 10 mm of Hg and a temperature over 90°C to obtain the formulation.

2. A formulation as claimed in claim 1, wherein the non-water-soluble constituent is a thermoregulatory constituent having a melting point in the range where the thermoregulatory effect is desired, in the range of about 0.01 to 20% of the mass of the formulation.

3. A formulation as claimed in claim 2, wherein the thermoregulatory constituent is at least one selected from a group consisting of nonadecane, eicosane, heptadecane, octadecane, pentadecane, hexadecane, decyl alcohol, lauryl alcohol and myristyl alcohol.

4. A formulation as claimed in claim 1, wherein the surfactant is at least one non-ionic surfactant selected from the group of alkyl phenoxy ethoxylated non-ionic surfactants which include Polyoxyethylene(8) isooctylphenyl ether, Nonylphenol polyethylene glycol ether, Polyoxyethylene(9) nonylphenyl ether, Polyoxyethylene(10) isooctylphenyl ether, Polyoxyethylene(12) nonylphenyl ether, Polyoxyethylene(12) isooctylphenyl ether, Polyoxyethylene(40) nonylphenyl ether, Polyoxyethylene(40) isooctylphenyl ether, Polyoxyethylene(100) nonylphenyl ether, Polyoxyethylene(150) dinonylphenyl ether, Surfonic N-95(Poly (oxy-1, 2-ethanediyl), alpha-(nonyl phenyl)-omega-hydroxyl-glycol ether) (nonylphenol 9.5-mole ethoxylate) , Surfonic N-95(Poly (oxy-1, 2-ethanediyl), alpha- (nonyl phenyl)-omega-hydroxyl-glycol ether) (nonylphenol 9.5-mole ethoxylate) , Surfonic N-120(nonylphenol 12-mole ethoxylate), Surfonic N-150 (nonylphenol 15-mole ethoxylate), Surfonic N-200 (nonylphenol 20-mole ethoxylate), Surfonic N-300(nonylphenol 30-mole ethoxylate), Surfonic N-400 nonylphenol 40-mole ethoxylate, Surfonic LF-7 (Alkyl polyoxyalkylene ether), Surfonic LF-17 (ethoxylated and propoxylated linear primary 12-14 carbon number alcohol), Igepal CO-630 (nonylphenoxy poly(ethyleneoxy)ethanol, branched), Surfonic DNP-40 (dinonylphenol ethoxylate glycol ether); ethoxylated alkyl alcohol surfactants, Polyethylene-block-Poly propylene glycol-block-polyethylene glycol and Ethylenediamine tetrakis(propylene oxide-block-ethylene oxide) tetrol.

5. A formulation as claimed in claim 2, wherein the preferred HLB value of the surfactant is between 16 and 40.

6. A thermoregulatory lyocell product being at least one product selected from the group consisting of fiber, yarn and fabric manufactured from the formulation as claimed in claim 2.

7. A formulation as claimed in claim 1, wherein the formulation is an antimicrobial lyocell formulation comprising:
• at least one non-aqueous solvent in the range of about 0.01 to 20% of the mass of the formulation,
• at least one water insoluble antimicrobial constituent soluble in said solvent, said constituent being in the range of about 0.001 to 10% of the mass of the formulation,
• at least one water soluble surfactant having HLB value in the range of 9 to 40, said surfactant being in the range of 0.001 to 10% of the mass of the formulation,
• cellulosic pulp in the range of about 3% to 35% of the mass of the formulation,
• N-METHYL-MORPHOLINE-N-OXIDE (NNMO) in the range of about 60 to 80% of the mass of the formulation; and
• water in the range of about 0% to 20 % with respect to the mass of the formulation.

8. A formulation as claimed in claim 7, wherein the antimicrobial constituent is at least one selected from a group consisting of 2-Methyl-4-isothiazolin-3-one, Phenoxyethanol, Benzoic acid 4-Hydroxy-methyl ester, Hydroxy-benzoic acid propyl ester, o- (2-naphthyl) methyl (3-methylphenyl) thiocarbamate, 5-chloro-2-(2,4-dichlorophenoxy)phenol, 4,5-dichloro-n-octyl-4-isothiazoline-3-one[DCOIT], 2-n-octyl-4-isothiazolin-3-one, 1-phenoxy propan-2-ol, pentachlorophenol, 5-chloro-2-dichlorophenoxy phenol, clotrimazole, p-chloro-m-xylenol and chloroquinaldol.

9. A formulation as claimed in claim 7, wherein the solvent is at least one solvent selected from a group of solvents consisting of C₁₀-C₄₄ alkanes (paraffinic hydrocarbons), polyethylene, polypropylene, polypropylene glycol, polytetramethylene glycol, polypropylene malonate, polyneopentyl glycol sebacate, polypentane glutarate, polyvinyl myristate, polyvinyl stearate, polyvinyl laurate, polyhexadecyl methacrylate, polyoctadecyl methacrylate, polyethylene oxides, polyethylene glycols, Arachidyl alcohol, behenyl alcohol, Selachyl alcohol, chimimyl alcohol, polyesters, di-iso decyl phthalate, benzyl alcohol, C4 -C30 aliphatic alcohols, C4 -C30 saturated hydrocarbons, C₄ -C₃₀ monounsaturated hydrocarbons, natural oils and mineral oil paraffins.

10. An antimicrobial lyocell product selected from the group consisting of fiber, yarn and fabric manufactured from a formulation as claimed in claim 8.

11. A formulation as claimed in claim 1, wherein the formulation is a perfumed lyocell formulation comprising:
• at least one non-aqueous solvent in the range of about 0.01 to 20% of the mass of the formulation;
• at least one water insoluble perfume constituent soluble said solvent, in the range of about 0.001 to 10% of the mass of the formulation;
• at least one water soluble non-cationic surfactant having HLB value in the range of 9 to 40, in the range of range of 0.001 to 10% of the mass of the formulation,
• cellulosic pulp in the range of about 3% to 35% of the mass of the formulation;
• NNMO in the range of about 60 to 80% of the mass of the formulation; and
• water in the range of about 0% to 20 % with respect to the mass of the formulation.

12. A formulation as claimed in claim 11, wherein the perfume constituent is at least one selected from a group consisting of citrus musk, floral woody, citrus musk woody, fresh bouquet, musk, floral musk, lavender oil, jasmine oil, rose oil, cedarwood oil, sandalwood oil, orange oil and lemon oil.

13. A formulation as claimed in claim 11, wherein the solvent is at least one solvent selected from a group of solvents consisting of C₁₀-C₄₄ alkanes (paraffinic hydrocarbons), polyethylene, polypropylene, polypropylene glycol, polytetramethylene glycol, polypropylene malonate, polyneopentyl glycol sebacate, polypentane glutarate, polyvinyl myristate, polyvinyl stearate, polyvinyl laurate, polyhexadecyl methacrylate, polyoctadecyl methacrylate, polyethylene oxides, polyethylene glycols, Arachidyl alcohol, behenyl alcohol, Selachyl alcohol, chimimyl alcohol, polyesters, di-iso decyl phthalate, benzyl alcohol, C4 -C30 aliphatic alcohols ,C4 -C30 saturated hydrocarbons, C₄ -C₃₀ monounsaturated hydrocarbons, natural oils and mineral oil paraffins.

14. A perfumed lyocell product selected from the group consisting of fiber, yarn and fabric manufactured from a formulation as claimed in claim 11.

15. A process of preparation of a formulation meant for manufacture of lyocell products as claimed in claim 1 comprising the following steps:
• selecting a non-water-soluble constituent from the group consisting of thermoregulatory constituents, antimicrobial constituents and perfume constituents, mixing with at least one non-aqueous solvent in the case of antimicrobial constituents and perfume constituents and heating said constituent to form a liquid non-aqueous phase;
• dissolving and stirring at least one water soluble nonionic surfactant having HLB value in the range of 9 to 40, optionally with a co-surfactant, in water to obtain an aqueous phase;
• admixing and homogenizing the non-aqueous phase with the aqueous phase to obtain a micro-emulsion;
• mixing together cellulosic pulp and NNMO solution to form a slurry;
• dispersing the micro-emulsion in the slurry to obtain a preform mass wherein the non-water-soluble constituent is in the form of evenly dispersed micro-reservoirs; and
• vaccumising the preform mass to remove water under 7 to 10 mm of Hg and a temperature over 90°C to obtain the formulation.

## Patentansprüche

1. Formulierung zur Herstellung von Lyocell-Produkten, erhältlich durch ein Verfahren umfassend die folgenden Schritte:
• Auswahl eines nicht-wasserlöslichen Bestandteils aus der Gruppe bestehend aus thermoregulatorischen Bestandteilen in einer Menge von 0,01 bis 20%, antimikrobiellen Bestandteilen in einer Menge von 0,001 bis 10% und Parfümbestandteilen in einer Menge von 0,001 bis 10%, die Menge ausgedrückt in Bezug auf die Gesamtmasse der Formulierung, Mischen mit mindestens einem nicht-wässrigen Lösungsmittel im Falle der antimikrobiellen Bestandteile und Parfümbestandteile, und Erhitzen des Bestandteils, um eine flüssige nicht-wässrige Phase zu bilden;
• Lösen und Rühren von mindestens einem wasserlöslichen nicht-kationischen Tensid, das einen HLB-Wert im Bereich von 9 bis 40 hat, wobei das Tensid im Bereich von 0,001 bis 10% der Masse der Formulierung vorliegt, in Wasser, um eine wässrige Phase zu erhalten;
• Vermischen und Homogenisieren der nicht-wässrigen Phase mit der wässerigen Phase, um eine Mikroemulsion zu erhalten;
• Zusammenmischen von Zellulosepulp im Bereich von 3 bis 35% der Masse der Formulierung und N-Methylmorpholin-N-oxid- (NNMO)-Lösung, wobei NNMO im Bereich von etwa 60 bis 80% der Masse der Formulierung vorliegt, um eine Aufschlämmung zu bilden;
• Dispergieren der Mikroemulsion in der Aufschlämmung, um eine Vorformmasse zu erhalten, wobei der nicht-wasserlösliche Bestandteil in der Form von gleichmäßig dispergierten Mikro-Reservoirs mit einer durchschnittlichen mittleren Größe im Bereich von 5 - 2000 nm vorliegt;
• Vakuumisieren der Vorformmasse, um Wasser bei 7 bis 10 mmHg und einer Temperatur über 90°Czu entfernen, um die Formulierung zu erhalten.

2. Formulierung gemäß Anspruch 1,wobei der nicht-wasserlösliche Bestandteil ein thermoregulatorischer Bestandteil mit einem Schmelzpunkt in dem Bereich, in dem der thermoregulatorische Effekt erwünscht ist, im Bereich von etwa 0,01 bis20% der Masse der Formulierung ist.

3. Formulierung gemäß Anspruch 2, worin der thermoregulatorische Bestandteil mindestens einer, ausgewählt aus der Gruppe, bestehend aus Nonadecan, Eicosan, Heptadecan, Octadecan, Pentadecan, Hexadecan, Decylalkohol, Laurylalkohol und Myristylalkohol ist.

4. Formulierung gemäß Anspruch 1,wobei das Tensid wenigstens ein nichtionisches Tensid ist, ausgewählt aus der Gruppe der alkylphenoxyethoxylierten nichtionischen Tenside, die Polyoxyethylen (8) Isooctylphenylether, Nonylphenolpolyethylenglykolether, Polyoxyethylen (9) Nonylphenylether, Polyoxyethylen (10) Isooctylphenylether, Polyoxyethylen (12) Nonylphenylether, Polyoxyethylen (12) Isooctylphenylether, Polyoxyethylen (40) Nonylphenylether, Polyoxyethylen (40) Isooctylphenylether, Polyoxyethylen (100) Nonylphenylether, Polyoxyethylen (150) Dinonylphenylether, Surfonic N-95 (Poly(oxy-1,2-ethandiyl), alpha-(nonylphenyl)-omega-hydroxyglykolether) (Nonylphenol 9.5mol Ethoxylat), Surfonic N-95 (Poly(oxy-1,2-ethandiyl), alpha-(nonylphenyl)-omega-hydroxyglykolether) (Nonylphenol 9.5mol Ethoxylat), Surfonic N-120 (Nonylphenol 12 Mol Ethoxylat), Surfonic N-150 (Nonylphenol 15 Mol Ethoxylat), Surfonic N-200 (Nonylphenol 20 Mol Ethoxylat), Surfonic N-300 (Nonylphenol 30 Mol Ethoxylat), Surfonic N-400 (Nonylphenol 40 Mol Ethoxylat), Surfonic LF-7 (Alkylpolyoxyalkylenether), Surfonic LF-17 (ethoxylierter und propoxylierter linearer primärer Alkohol mit Kohlenstoffzahl 12-14), Igepal CO-630 (Nonylphenoxypoly(ethylenoxy)ethanol, verzweigt), Surfonic DNP-40 (Dinonylphenolethoxylatglykolether) umfassen; ethoxylierten Alkylalkoholtensiden, Polyethylen-block-polypropylenglykol-block-polyethylenglykol und Ethylendiamin-tetrakis(propylenoxid-Block-ethylenoxid)tetrol.

5. Formulierung gemäß Anspruch 2, wobei der bevorzugte HLB-Wert des Tensids zwischen 16 und 40 liegt.

6. Thermoregulatorisches Lyocell-Produkt, das mindestens ein Produkt, ausgewählt aus der Gruppe, bestehend aus Faser, Garn und Gewebe ist, das aus der Formulierung gemäß Anspruch 2 hergestellt ist.

7. Formulierung gemäß Anspruch 1, wobei die Formulierung eine antimikrobielle LyocellFormulierung ist, umfassend:
• mindestens ein nicht-wässriges Lösungsmittel im Bereich von etwa 0,01 bis 20% der Masse der Formulierung,
• mindestens einen wasserunlöslichen antimikrobiellen Bestandteil, der in dem Lösungsmittel löslich ist, wobei der Bestandteil in einem Bereich von etwa 0,001 bis 10% der Masse der Formulierung vorliegt,
• mindestens ein wasserlösliches Tensid mit einem HLB-Wert im Bereich von 9 bis 40, wobei das Tensid im Bereich von 0,001 bis 10% der Masse der Formulierung vorliegt,
• Zellulosepulp im Bereich von etwa 3% bis 35% der Masse der Formulierung,
• N-Methylmorpholin-N-oxid (NNMO) im Bereich von etwa 60 bis 80% der Masse der Formulierung, und
• Wasser im Bereich von etwa 0% bis 20% bezogen auf die Masse der Formulierung.

8. Formulierung gemäß Anspruch 7, wobei der antimikrobielle Bestandteil wenigstens einer aus einer Gruppe, bestehend aus 2 -Methyl-4-isothiazolin-3-on, Phenoxyethanol, Benzoesäure-4-hydroxymethylester, Hydroxybenzoesäurepropylester, o-(2-Naphthyl)methyl(3-methylphenyl)thiocarbamat, 5-Chlor-2-(2,4-dichlorphenoxy)phenol, 4,5-Dichlor-n-octyl-4-isothiazolin-3-on [DCOIT], 2-n-Octyl-4-isothiazolin-3-on, 1-Phenoxypropan-2-ol, Pentachlorphenol, 5-Chlor-2-dichlorphenoxyphenol, Clotrimazol, p-Chlor-m-xylenol und Chlorquinaldol ist.

9. Formulierung gemäß Anspruch 7, wobei das Lösungsmittel mindestens ein Lösungsmittel, ausgewählt aus einer Gruppe von Lösungsmitteln, bestehend aus C₁₀ - C₄₄ Alkanen (Paraffinkohlenwasserstoffen), Polyethylen, Polypropylen, Polypropylenglykol, Polytetramethylenglykol, Polypropylenmalonat, Polyneopentylglykolsebacat, Polypentanglutarat, Polyvinylmyristat, Polyvinylstearat, Polyvinyllaurat, Polyhexadecylmethacrylat, Polyoctadecylmethacrylat, Polyethylenoxiden, Polyethylenglykolen, Arachidylalkohol, Behenylalkohol, Selachylalkohol, Chimylalkohol, Polyestern, di-Isodecylphthalat, Benzylalkohol, C₄-C₃₀ aliphatischen Alkoholen, C₄-C₃₀ gesättigten Kohlenwasserstoffen, C₄-C₃₀ einfach ungesättigten Kohlenwasserstoffen, natürlichen Ölen und Mineralölparaffinen ist.

10. Antimikrobielles Lyocell-Produkt, ausgewählt aus der Gruppe, bestehend aus Faser, Garn und Gewebe, hergestellt aus einer Formulierung gemäß Anspruch8.

11. Formulierung gemäß Anspruch 1, wobei die Formulierung eine parfümierte Lyocellformulierung ist, umfassend:
• mindestens ein nicht-wässriges Lösungsmittel im Bereich von etwa 0,01 bis 20% der Masse der Formulierung,
• mindestens einen wasserunlöslichen Parfümbestandteil, der in dem Lösungsmittel löslich ist, in einem Bereich von etwa 0,001 bis 10% der Masse der Formulierung,
• mindestens ein wasserlösliches, nicht-kationisches Tensid mit einem HLB-Wert im Bereich von 9 bis 40, im Bereich von 0,001 bis 10% der Masse der Formulierung,
• Zellulosepulp im Bereich von etwa 3% bis 35% der Masse der Formulierung,
• NNMO im Bereich von etwa 60 bis 80% der Masse der Formulierung, und
• Wasser im Bereich von etwa 0% bis 20% bezogen auf die Masse der Formulierung.

12. Formulierung gemäß Anspruch 11, wobei der Parfümbestandteil mindestens einer aus einer Gruppe, bestehend aus Zitrus-Moschus, blumig-holzig, Zitrus-Moschus-holzig, frisches Bouquet, Moschus, blumig-Moschus, Lavenderöl, Jasminöl, Rosenöl Zedernholzöl, Sandelholzöl, Orangenöl und Zitronenöl ist.

13. Formulierung gemäß Anspruch 11, wobei das Lösungsmittel mindestens ein Lösungsmittel aus einer Gruppe von Lösungsmitteln, bestehend aus C₁₀-C₄₄ Alkanen (Paraffinkohlenwasserstoffen), Polyethylen, Polypropylen, Polypropylenglykol, Polytetramethylenglykol, Polypropylenmalonat, Polyneopentylglykolsebacat, Polypentanglutarat, Polyvinylmyristat, Polyvinylstearat, Polyvinyllaurat, Polyhexadecylmethacrylat, Polyoctadecylmethacrylat, Polyethylenoxiden, Polyethylenglykolen, Arachidylalkohol, Behenylalkohol, Selachylalkohol, Chimylalkohol, Polyestern, di-Isodecylphthalat, Benzylalkohol, C₄-C₃₀ aliphatischen Alkoholen, C₄-C₃₀ gesättigten Kohlenwasserstoffen, C₄-C₃₀ einfach ungesättigten Kohlenwasserstoffen, natürlichen Ölen und Mineralölparaffinen ist.

14. Parfümiertes Lyocell-Produkt, ausgewählt aus der Gruppe, bestehend aus Faser, Garn und Gewebe, hergestellt aus einer Formulierung gemäß Anspruch 11.

15. Verfahren zur Herstellung einer Formulierung für die Herstellung von Lyocell-Produkten gemäß Anspruch 1, umfassend die folgenden Schritte:
• Auswählen eines nicht-wasserlöslichen Bestandteils, ausgewählt aus der Gruppe bestehend aus thermoregulatorischen Bestandteilen, antimikrobiellen Bestandteilen und Parfümbestandteilen, Mischen mit mindestens einem nicht-wässrigen Lösungsmittel im Fall der antimikrobiellen Bestandteile und Parfümbestandteile und Erhitzen des Bestandteils, um eine flüssige nicht-wässrige Phase zu bilden;
• Auflösen und Rühren von mindestens einem wasserlöslichen nichtionischen Tensid mit einem HLB-Wert im Bereich von 9 bis 40, gegebenenfalls mit einem Co-Tensid, in Wasser, um eine wässrige Phase zu erhalten;
• Vermischen und Homogenisieren der nicht-wässrigen mit der wässrigen Phase, um eine Mikroemulsion zu erhalten;
• Zusammenmischen von Zellulosepulp und NNMO-Lösung, um eine Aufschlämmung zu bilden;
• Dispergieren der Mikroemulsion in der Aufschlämmung, um eine Vorformmasse zu erhalten, wobei der nicht-wasserlösliche Bestandteil in der Form von gleichmäßig dispergierten Mikro-Reservoirs vorliegt, und
• Vakuumisieren der Vorformmasse, um Wasser bei 7 bis 10 mmHg und einer Temperatur über 90°Czu entfernen, um die Formulierung zu erhalten.

## Revendications

1. Préparation destinée à la fabrication de produits Lyocell pouvant être obtenus par l'un des procédés comprenant les étapes suivantes:
• la sélection d'un constituant insoluble dans l'eau parmi le groupe composé de constituants de thermorégulation d'une teneur comprise entre 0,01 et 20%, de constituants antimicrobiens d'une teneur comprise entre 0,001 et 10% , et de constituants pour parfum d'une teneur comprise entre 0,001 et 10%, ladite teneur étant exprimée par rapport au poids/volume de la préparation, le mélange de ceux-ci avec au moins un solvant non aqueux dans le cas des constituants antimicrobiens et des constituants pour parfum, et le chauffage dudit constituant pour former une phase liquide non aqueuse;
• la dissolution et l'agitation d'au moins un agent tensio-actif non-cationique soluble dans l'eau ayant un HLB de 9 à 40, la teneur dudit agent tensio-actif étant comprise entre 0,001 et 10% poids/volume de la masse de la préparation, dans de l'eau pour obtenir une phase aqueuse;
• le mélange et l'homogénéisation de la phase non aqueuse et de la phase aqueuse pour obtenir une microémulsion;
• le mélange d'une pâte cellulosique d'une teneur comprise entre 3 et 35% poids/volume de la préparation avec une solution N-METHYL-MORPHOLINE-N-OXYDE (NNMO), **caractérisé en ce que** la teneur du NNMO est comprise à environ 60 à 80% poids/volume de la préparation, pour former une suspension ;
• la dispersion de la microémulsion dans la suspension pour obtenir une masse de préformes, **caractérisée en ce que** le constituant insoluble dans l'eau est sous la formede microréservoirs dispersés de façon homogène et possède une taille moyenne comprise dans l'intervalle entre 5 - 2,000 nm; et
• l'aspiration de la masse de préformes pour enlever de l'eau sous 7 à 10 mm de Hg à une température supérieure à 90°C pour obtenir la préparation.

2. Préparation suivant la revendication 1, **caractérisée en ce que** le constituant insoluble dans l'eau est un constituant de thermorégulation ayant un point de fusion dans l'intervalle de l'effet thermorégulateur souhaité, dont la concentration dans la préparation est comprise entre environ 0,01 à 20% poids/volume.

3. Préparation suivant la revendication 2, **caractérisée en ce que** le constituant de thermorégulation est au moins choisi parmi le groupe composé de nonadécane, d'éicosane, d'heptadécane, d'octadécane, de pentadécane, d'hexadécane, d'alcool décylique, d' alcool laurylique et d'alcool myristylique.

4. Préparation suivant la revendication 1, **caractérisée en ce que** l'agent tensioactif est au moins un agent tensioactif non ionique choisi parmi le groupe d'agents tensioactifs non ioniques alkyle phénoxy ethoxylée comprenant de l'éther isooctylphénylique de polyoxyéthylène(8), du nonylphénol, éther de polyéthylèneglycol, de l'éther monononylphénylique de polyoxyethylene(9), de l'ether isooctylphénylique de polyoxyethylene(lO), de l'éther monononylphénylique de polyoxyethylene(12), de l'ether isooctylphénylique de polyoxyethylene(12), de l'éther monononyphénylique de polyoxyethylene(40), de l'ether isooctylphénylique de polyoxyethylene(40), de l'éther monononyphénylique de polyoxyethylene(lOO), de l'éther dinonylphényl de polyoxyethylene(150), de surfonic N-95 (Poly (oxy-1, 2-éthanediyle), alpha-(nonylphényle)-omega-hydroxyl- éther de glycol) (éthoxylate de nonylphénol de 9,5 moles Surfonic N-95(Poly (oxy-1, 2-ethanediyle), alpha-(nonylphénylique)-omega-hydroxyl-éther de glycol) (éthoxylate de nonylphénol de 9,5 moles), Surfonic N-120 (éthoxylate de nonylphénol de 12 moles), Surfonic N-150 (éthoxylate de nonylphénol de 15 moles), Surfonic N-200 (éthoxylate de nonylphénol de 20 moles), Surfonic N-300( éthoxylate de nonylphénol de 30 moles), Surfonic N-400 éthoxylate de nonylphénol de 40 moles, Surfonic LF-7 (éther d'alkyle polyoxyalkyléné), Surfonic LF-17 (alcool de nombre d'atomes de carbone de 12 à 14 éthoxylé et propoxylé linéaire primaire), Igepal CO-630 (poly éthanol (ethyleneoxy), ramifié), Surfonic DNP-40 (éther de glycol d'éthoxylate dinonylpheno); agents tensioactifs des alcools alkyliques ethoxylés, bloc de polyéthylène-bloc de poly propylène glycol-polyéthylèneglycol et tétrakis Emylenediamine (oxide de propylène -block- oxide d'éthylène) tétrol.

5. Préparation suivant la revendication 2, **caractérisée en ce que** la valeur préférée HLB de l'agent tensioactif est comprise entre 16 et 40.

6. Un produit Lyocell de thermorégulation, **caractérisé en ce qu'**au moins un produit est choisi parmi un groupe composé de fibres, fils et tissus fabriqués à partir de la préparation suivant la revendication 2.

7. Préparation suivant la revendication 1, **caractérisée en ce que** la préparation est une préparation de Lyocell antimicrobien contenant:
• au moins un solvant non aqueux ayant une concentration dans la préparation est comprise entre environ 0,01 à 20% poids/volume,
• au moins un constituant antimicrobien insoluble dans l'eau mais soluble dans ledit solvant, la concentration dudit constituant dans la préparation étant comprise entre environ 0,001 à 10% poids/volume,
• au moins un agent tensioactif soluble dans l'eau ayant une valeur HLB comprise entre 9 et 40, la concentration dudit agent tensioactif dans la préparation étant comprise entre 0,001 et 10% poids/volume,
• une pâte cellulosique dont la teneur dans la préparation est comprise entre 3% et 35% poids/volume,
• du N-METHYL-MOPvPHOLINE-N-OXIDE (NNMO) dont la concentration dans la préparation est comprise entre 60 et 80% poids/volume; et
• de l'eau dont la teneur dans la préparation est comprise entre environ 0% à 20 % poids/volume.

8. Préparation suivant la revendication 7, **caractérisée en ce que** l'agent antimicrobien est au moins choisi parmi un groupe composé de 2-Methyl-4-isothiazolin-3-un, Phenoxyethanol, Benzoic acid 4-Hydroxy-methyl ester, Hydroxy-benzoic acid propyl ester, o- (2-naphthyl) methyl (3-methylphenyl) thiocarbamate, 5-chloro-2-(2,4-dichlorophenoxy)phenol, 4,5-dichloro-n-octyl-4-isothiazoline-3 -onefDCOIT], 2-n-octyl-4-isothiazolin-3-one, 1-phenoxy propan-2-ol, pentachlorophenol, 5-chloro-2-dichlorophenoxy phenol, clotrimazole, p-chloro-m-xylenol and chloroquinaldol.

9. Préparation suivant la revendication 7, **caractérisée en ce que** la préparation contient au moins un solvant choisi parmi un groupe de solvants composé d'alcanes C₁₀-C₄₄ (hydrocarbones paraffiniques), de polyéthylène, de polypropylène, de polypropylèneglycol, de polytétraméthylèneglycol, de malonate de polypropylène , de polyneopéntylglycol sebacate, de glutarate polypentane , de myristate de polyvinyle, de polystérarate de vynil, de poly laurate de vinyl, de méthacrylate de polyhexadecyl, de méthacrylate polyoctadecyl, de poly oxides d'éthylène, de polyéthylèneglycols, d'alcool d'arachidylique, d'alcool béhénylique, d'alcool sélachylique, d'alcool chimimylique, de polyesters, di-iso-décyl phthalate, d'alcool benzylique, d'alcools aliphatiques C4 -C30, d'hydrocarbones saturés C4 -C30, d'hydrocarbones non saturés C₄ -C₃₀, d'huiles naturelles et des paraffines d'huile minérale.

10. Produit Lyocell antimicrobien choisi parmi le groupe composé de fibres, fils et tissus fabriqués à partir de la préparation suivant la revendication 8.

11. Préparation suivant la revendication 1, **caractérisée en ce que** la préparation est une préparation de Lyocell parfumée contenant:
• au moins un solvant non aqueux dont la concentration dans la préparation est comprise entre environ 0,01 à 20% poids/volume;
• au moins un constituant pour parfum insoluble dans l'eau, ledit solvant ayant une concentration dans la préparation comprise entre environ 0,001 et 10% poids/volume;
• au moins un agent tensioactif non cationique soluble dans l'eau ayant une valeur HLB comprise entre 9 et 40, dont la teneur dans la préparation est comprise entre 0,001 et 10% poids/volume,
• une pâte cellulosique dont la concentration dans la préparation est comprise entre environ 3% et 35% poids/volume;
• du NNMO ayant une concentration dans la préparation comprise entre environ 60 et 80% poids/volume; et
• de l'eau ayant une teneur dans la préparation comprise entre environ 0% et 20 % poids/volume.

12. Préparation suivant la revendication 11, **caractérisée en ce que** le la préparation contient au moins un constituant pour parfum choisi parmi le groupe composé de musc d'agrumes, de bois floral, de bois d'agrumes musqué, de bouquet frais, de musc, de musc floral, d'huile de lavande, d'huile de jasmin, d'huile de roses, d'huile de cèdre, d'huile de bois de santal, d'huile d'oranges et d'huile de citrons.

13. Préparation suivant la revendication 11, **caractérisée en ce que** la préparation contient au moins un solvant choisi parmi un groupe de solvants composé d'alcanes (hydrocarbones paraffiniques), de polyéthylène, de polypropylène, de polypropylèneglycol, de polytétraméthylèneglycol, de malonate de polypropylène , de polyneopéntylglycol sebacate, de glutarate polypentane , de myristate de polyvinyle, de polystérarate de vynil, de poly laurate de vinyl, de méthacrylate de polyhexadecyl, de méthacrylate polyoctadecyl, de poly oxides d'éthylène, de polyéthylèneglycols, d'alcool d'arachidylique, d'alcool béhénylique, d'alcool sélachylique, d'alcool chimimylique, de polyesters, di-iso-décyl phthalate, d'alcool benzylique, d'alcools aliphatiques C4 -C30, d'hydrocarbones saturés C4 -C30, d'hydrocarbones non saturés C₄ -C₃₀, d'huiles naturelles et des paraffines d'huile minérale.

14. Produit Lyocell antimicrobien choisi parmi le groupe composé de fibres, fils et tissus fabriqués à partir de la préparation suivant la revendication 11.

15. Procédé de préparation destine à la fabrication de produits Lyocell suivant la revendication 1 comprenant les étapes suivantes:
• la sélection d'un constituant insoluble dans l'eau parmi le groupe composé de constituants de thermorégulation, de constituants antimicrobiens et de constituants pour parfum, un mélange de ceux-ci avec au moins un solvant non aqueux dans le cas de constituants antimicrobiens et de constituants pour parfum, et le chauffage dudit constituant pour former la phase liquide non aqueuse;
• la dissolution et l'agitation d'au moins un agent tensio-actif non-cationique soluble dans l'eau ayant un HLB de 9 à 40, en option avec un co-agent tensioactif, dans de l'eau pour obtenir une phase aqueuse;
• le mélange et l'homogénéisation de la phase non aqueuse et de la phase aqueuse pour obtenir une microémulsion;
• Le mélange d'une pâte cellulosique avec une solution NNMO pour former une suspension;
• la dispersion de la microémulsion dans la suspension pour obtenir une masse de préformes, **caractérisée en ce que** le constituant insoluble dans l'eau est sous la forme de microréservoirs dispersés de façon homogène ; et
• l'aspiration de la masse de préformes pour enlever de l'eau sous 7 à 10 mm de Hg à une température supérieure à 90°C pour obtenir la préparation.
